(19) Europäisches Patentamt / European Patent Office / Office européen des brevets

(11) **EP 2 285 486 B1**

(12) **FASCICULE DE BREVET EUROPEEN**

(45) Date de publication et mention de la délivrance du brevet:
**30.04.2014 Bulletin 2014/18**

(21) Numéro de dépôt: **09754063.7**

(22) Date de dépôt: **13.05.2009**

(51) Int Cl.:
*B01J 21/04* (2006.01)     *B01J 21/08* (2006.01)
*B01J 23/28* (2006.01)     *B01J 23/30* (2006.01)
*B01J 23/42* (2006.01)     *B01J 23/652* (2006.01)
*B01J 23/75* (2006.01)     *B01J 23/755* (2006.01)
*B01J 29/00* (2006.01)     *B01J 29/04* (2006.01)
*B01J 29/06* (2006.01)     *B01J 29/068* (2006.01)
*B01J 29/072* (2006.01)     *B01J 29/80* (2006.01)
*B01J 35/08* (2006.01)

(86) Numéro de dépôt international:
**PCT/FR2009/000557**

(87) Numéro de publication internationale:
**WO 2009/144413 (03.12.2009 Gazette 2009/49)**

(54) **PROCEDE DE PREPARATION D'UN CATALYSEUR A BASE D'UN MATERIAU AMORPHE COMPRENANT DU SILICIUM A POROSITÉ HIÉRARCHISÉE ET ORGANISEE ET PROCEDE AMELIORE DE TRAITEMENT DE CHARGES HYDROCARBONEES**

HERSTELLUNGSVERFAHREN EINES KATALYSATORS BESTEHEND AUS EINEM AMORPHEN SILIZIUMHALTIGEN MATERIAL MIT HIERARCHISCH STRUKTURIERTER UND ORGANISIERTER POROSITÄT SOWIE VERBESSERTES VERFAHREN ZUR BEHANDLUNG VON KOHLENWASSERSTOFFSTRÖMEN

METHOD FOR PREPARING A CATALYST COMPRISING AN AMORPHOUS MATERIAL CONTAINING SILICON HAVING HIERARCHICAL AND ORGANIZED POROSITY, AND IMPROVED METHOD FOR TREATING HYDROCARBON FEEDS

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité: **28.05.2008 FR 0802952**

(43) Date de publication de la demande:
**23.02.2011 Bulletin 2011/08**

(73) Titulaire: **IFP Energies nouvelles**
**92852 Rueil-Malmaison Cedex (FR)**

(72) Inventeurs:
• **BONDUELLE, Audrey**
**F-69340 Francheville (FR)**
• **CHAUMONNOT, Alexandra**
**F-69008 Lyon (FR)**

(56) Documents cités:

**EP-A- 1 627 852     EP-A- 1 627 853**
**WO-A-2006/128989     US-B1- 6 585 952**

• **PEREZ-PARIENTE J ET AL: "Organising disordered matter: strategies for ordering the network of mesoporous materials" COMPTES RENDUS - CHIMIE, ELSEVIER, PARIS, FR, vol. 8, no. 3-4, 1 mars 2005 (2005-03-01), pages 569-578, XP004881326 ISSN: 1631-0748**
• **ZHENG J ET AL: "Hydrothermally stable MCM-41 analogue with extensive embedded voids" CATALYSIS TODAY, ELSEVIER, vol. 93-95, 1 septembre 2004 (2004-09-01), pages 529-534, XP004548989 ISSN: 0920-5861**
• **LIU, YU; ZAHANG, WENZHONG; PINNAVAIA, THOMAS J.: "Steam-Stable MSU-S Alumiosilicate Mesostructures Assembled from Zeolite ZSM-5 and Zeolite Beta Seeds" ANGEWANDTE CHEMIE INTERNATIONAL EDITION, vol. 40, no. 7, 2001, pages 1255-1258, XP002516785**

**Description**

La présente invention se rapporte au domaine des catalyseurs bifonctionnels caractérisés par des propriétés hydro-déshydrogénante et d'acidité. Elle concerne plus particulièrement un procédé de préparation d'un catalyseur comprenant au moins un matériau métallosilicate et plus précisément aluminosilicate amorphe présentant une porosité hiérarchisée et organisée dans le domaine de la microporosité et de la mésoporosité et au moins un élément hydro-déshydrogénant.

L'invention concerne également les procédés d'hydrocraquage, d'hydroconversion et d'hydrotraitement mettant en oeuvre ce catalyseur.

En particulier, l'invention concerne l'hydrocraquage de charges hydrocarbonées contenant par exemple des composés aromatiques, et/ou oléfiniques, et/ou naphténiques, et/ou paraffiniques à l'exclusion des charges issues du procédé Fischer-Tropsch et contenant éventuellement des métaux, et/ou de l'azote, et/ou de l'oxygène et/ou du soufre.

L'objectif du procédé d'hydrocraquage est essentiellement la production de distillats moyens, c'est-à-dire de coupes à point d'ébullition initial d'au moins 150°C et final allant jusqu'à avant le point d'ébullition initial du résidu, par exemple inférieur à 340°C, ou encore à 370°C.

L'invention concerne également l'hydrotraitement de charges hydrocarbonées telles que les coupes pétrolières, les coupes issues du charbon ou les hydrocarbures produits à partir du gaz naturel. Ces charges hydrocarbonées comportent de l'azote et/ou du soufre et/ou des composés aromatiques et/ou oléfiniques et/ou naphténiques et/ou paraffiniques, lesdites charges contenant éventuellement des métaux et/ou de l'oxygène et/ou du soufre. Par hydrotraitement on entend les réactions d'hydrogénation, d'hydrodésulfuration, d'hydrodésazotation, d'hydrodéoxygénation, d'hydrodésaromatisation et d'hydrodémétallation.

État de la technique antérieure

L'hydrocraquage de coupes pétrolières lourdes est un procédé très important du raffinage qui permet de produire, à partir de charges lourdes excédentaires et peu valorisables, des fractions plus légères telles que essences, carburéacteurs et gazoles légers que recherche le raffineur pour adapter sa production à la structure de la demande. Certains procédés d'hydrocraquage permettent d'obtenir également un résidu fortement purifié pouvant fournir d'excellentes bases pour huiles. Par rapport au craquage catalytique, l'intérêt de l'hydrocraquage catalytique est de fournir des distillats moyens, carburéacteurs et gazoles, de très bonne qualité. Inversement l'essence produite présente un indice d'octane beaucoup plus faible que celle issue du craquage catalytique.

L'hydrocraquage est un procédé qui tire sa flexibilité de trois éléments principaux qui sont, les conditions opératoires utilisées, les types de catalyseurs employés et le fait que l'hydrocraquage de charges hydrocarbonées peut être réalisé en une ou deux étapes.

Les catalyseurs d'hydrocraquage utilisés dans les procédés d'hydrocraquage sont tous du type bifonctionnel associant une fonction acide à une fonction hydro-déshydrogénante. La fonction acide est apportée par des supports dont les surfaces varient généralement de 150 à 800 m$^2$.g$^{-1}$ et présentant une acidité superficielle, telles que les alumines halogénées (chlorées ou fluorées notamment), les combinaisons d'oxydes de bore et d'aluminium, les aluminosilicates mésoporeux amorphes et les zéolithes. La fonction hydro-déshydrogénante est apportée soit par un ou plusieurs métaux du groupe VIB de la classification périodique des éléments, soit par une association d'au moins un métal du groupe VIB de la classification périodique avec au moins un métal du groupe VIII.

L'équilibre entre les deux fonctions acide et hydro-déshydrogénante est un des paramètres qui régissent l'activité et la sélectivité du catalyseur. Une fonction acide faible et une fonction hydro-déshydrogénante forte donnent des catalyseurs peu actifs, travaillant à une température en général élevée (supérieure ou égale à 390-400°C) et avec une vitesse spatiale d'alimentation faible (la VVH exprimée en volume de charge à traiter par unité de volume de catalyseur et par heure est généralement inférieure ou égale à 2), mais dotés d'une très bonne sélectivité en distillats moyens. Inversement, une fonction acide forte et une fonction hydro-déshydrogénante faible donnent des catalyseurs actifs, mais présentant de moins bonnes sélectivités en distillats moyens (carburéacteurs et gazoles).

Un type de catalyseurs conventionnels d'hydrocraquage est à base de supports amorphes modérément acides, tels les aluminosilicates mésoporeux par exemple. Ces systèmes sont utilisés pour produire des distillats moyens de bonne qualité et, éventuellement, des bases huiles. Ces catalyseurs sont par exemple utilisés dans les procédés en une étape. L'inconvénient de ces catalyseurs à base d'un support mésoporeux amorphe conventionnel est leur faible activité.

Les catalyseurs comportant par exemple de la zéolithe Y de type structural FAU, ou les catalyseurs comportant par exemple une zéolithe de type bêta (type structural BEA) présentent quant à eux une activité catalytique supérieure à celle des aluminosilicates mésoporeux amorphes, mais présentent des sélectivités en distillats moyens (carburéacteurs et gazoles) qui sont plus faibles.

Un des challenges scientifiques de ces dernières années consiste à développer de nouveaux supports aluminosilicates cristallisés ou non qui présenteraient un compromis acceptable entre activité catalytique et sélectivité en distillats moyens et qui se situeraient à mi-chemin entre un comportement de type zéolithique et un comportement de type aluminosilicate mésoporeux amorphe.

D'autre part, la proportion des composés dits "lourds" dans les charges brutes à traiter devenant de plus en plus importante, le développement de catalyseurs présentant des propriétés texturales adaptées à ces nouvelles charges représente également un enjeu majeur.

Dans cette quête de nouveaux matériaux aluminosilicates, les matériaux dits "mésostructurés", découverts au début des années 90, représentent une alternative séduisante (G. J. de A. A. Soler-IIlia, C. Sanchez, B. Lebeau, J. Patarin, Chem. Rev., 2002, 102, 4093). En effet, grâce à des méthodes de synthèse dites de "chimie douce", des matériaux mésoporeux amorphe dont la taille et la morphologie des pores sont contrôlées ont été obtenus. Ces matériaux mésostructurés sont ainsi générés à basse température par la coexistence en solution aqueuse ou dans des solvants polaires de précurseurs inorganiques avec des agents structurants, généralement des tensioactifs moléculaires ou supramoléculaires, ioniques ou neutres. Le contrôle des interactions électrostatiques ou par liaisons hydrogènes entre les précurseurs inorganiques et l'agent structurant conjointement lié à des réactions d'hydrolyse/condensation du précurseur inorganique conduit à un assemblage coopératif des phases organique et inorganique générant des agrégats micellaires de tensioactifs de taille uniforme et contrôlée au sein d'une matrice inorganique. Ce phénomène d'auto-assemblage coopératif, régi entre autres par la concentration en agent structurant, peut être induit par évaporation progressive d'une solution de réactifs dont la concentration en agent structurant est inférieure à la concentration micellaire critique, ce qui peut conduire par exemple à la formation d'une poudre mésostructurée après atomisation de la solution (technique aérosol). La libération de la porosité est ensuite obtenue par élimination du tensioactif, celle-ci étant réalisée classiquement par des procédés d'extraction chimique ou par traitement thermique. En fonction de la nature des précurseurs inorganiques et de l'agent structurant employé ainsi que des conditions opératoires imposées, plusieurs familles de matériaux mésostructurés ont été développées. Pour exemple, la famille M41 S initialement développée par Mobil (J. S. Beck, J. C. Vartuli, W. J. Roth, M. E. Leonowicz, C. T. Kresge, K. D. Schmitt, C. T.-W. Chu, D. H. Olson, E. W. Sheppard, S. B. McCullen, J. B. Higgins, J. L. Schlenker, J. Am. Chem. Soc., 1992, 114, 27, 10834), constituée de matériaux mésoporeux obtenus via l'emploi de surfactants ioniques comme des sels d'ammonium quaternaire, possédant une structure généralement hexagonale, cubique ou lamellaire, des pores de taille uniforme comprise dans une gamme de 1,5 à 10 nm et des parois amorphes d'épaisseur de l'ordre de 1 à 2 nm a largement été étudiée. De même, l'utilisation d'agents structurants macromoléculaires amphiphiles de type copolymères à bloc, a conduit à l'élaboration de la famille de matériaux dénommée SBA, ces solides étant caractérisés par une structure généralement hexagonale, cubique ou lamellaire, des pores de taille uniforme comprise dans une gamme de 4 à 50 nm et des parois amorphes d'épaisseur comprise dans une gamme de 3 à 7 nm.

Cependant, il a été montré que, bien que présentant des propriétés texturales et structurales particulièrement intéressantes (en particulier pour le traitement des charges lourdes), les matériaux aluminosilicates mésostructurés ainsi obtenus développaient une activité catalytique en tout point semblable à celle de leurs homologues à porosité non organisée (D. Zaho, J. Feng, Q. Huo, N. Melosh, G. H. Fredrickson, B. F. Chmelke, G. D. Stucky, Science, 1998, 279, 548 ; Y. -H. Yue, A. Gédéon, J. -L. Bonardet, J. B. d'Espinose, N. Melosh, J. Fraissard, Stud. Surf. Sci. Catal., 2000, 129, 209). De nombreux travaux ont donc été entrepris dans le but de développer des matériaux présentant une microporosité de nature zéolithique et une porosité mésostructurée de façon à bénéficier simultanément des propriétés catalytiques propres aux zéolithes et des propriétés catalytiques et surtout texturales de la phase mésoporeuse organisée.

Un grand nombre de techniques de synthèse permettant de générer des matériaux présentant cette bi-porosité ont ainsi été répertoriées dans la littérature ouverte (US 6 669 924 ; Z. Zhang, Y. Han, F. Xiao, S. Qiu, L. Zhu, R. Wang, Y. Yu, Z. Zhang, B. Zou, Y. Wang, H. Sun, D. Zhao, Y. Wei, J. Am. Chem. Soc., 2001, 123, 5014 ; A. Karlsson, M. Stöcker, R. Schmidt, Micropor. Mesopor. Mater., 1999, 27, 181 ; P. Prokesova, S, Mintova, J. Cejka, T. Bein, Micropor. Mesopor. Mater., 2003, 64, 165 ; D. T. On, S. Kaliaguine, Angew. Hem. Int. Ed., 2002, 41, 1036). D'un point de vue expérimental, à l'inverse de la technique "aérosol" citée préalablement, les matériaux aluminosilicates à porosité hiérarchisée ainsi définis ne sont pas obtenus par une concentration progressive des précurseurs inorganiques et de(s) l'agent(s) structurant(s) au sein de la solution où ils sont présents mais sont classiquement obtenus par précipitation directe au sein d'une solution aqueuse ou dans des solvants polaires en jouant sur la valeur de la concentration micellaire critique de l'agent structurant. De plus, la synthèse de ces matériaux obtenue par précipitation nécessite une étape de mûrissement en autoclave ainsi qu'une étape de filtration de la suspension générée. Les particules élémentaires habituellement obtenues ne présentent pas de forme régulière et sont caractérisées généralement par une taille variant généralement entre 200 et 500 nm et parfois plus.

Un des objectifs de l'invention est donc de proposer un catalyseur présentant des performances améliorées notamment en hydrocraquage et en hydrotraitement.

*Résumé de l'invention*

L'invention concerne un procédé de préparation selon la revendication 1 d'un catalyseur comprenant, au moins un matériau amorphe comprenant du silicium à porosité hiérarchisée et organisée et au moins un élément hydro-déshydrogénant choisi dans le groupe formé par les éléments du groupe VIB et/ou du groupe VIII de la classification périodique. Ledit matériau amorphe comprenant du silicium à porosité hiérarchisée et organisée est constitué d'au moins deux particules sphériques élémentaires, chacune desdites particules comprenant une matrice à base d'oxyde de silicium, mésostructurée, ayant un diamètre de mésopores compris entre 1,5 et 30 nm et présentant des parois amorphes et microporeuses d'épaisseur comprise entre 1,5 et 50 nm, lesdites particules sphériques élémentaires ayant un diamètre maximal de 200 microns. Les parois amorphes de ladite matrice à base d'oxyde de silicium sont selon l'invention entièrement constituées d'entités proto-zéolithiques à l'origine de la microporosité. Celles-ci sont des espèces préparées à partir de réactifs utilisés pour la synthèse de zéolithes ou de solides apparentés, la préparation desdites espèces n'ayant pas été menée jusqu'au stade de la formation de zéolithes cristallisées. Ainsi, les formulations conduisant à toute zéolithe ou solide apparenté développant des propriétés d'acidité peuvent être utilisées. Il en résulte que ladite matrice à base d'oxyde de silicium comprend, en outre, au moins un élément X, la nature chimique de X étant fonction de la composition desdites formulations employées. Avantageusement, X est l'élément aluminium. Le catalyseur renferme également éventuellement au moins un élément dopant en quantité contrôlée choisi parmi le phosphore, le bore et le silicium, éventuellement au moins un élément du groupe VB de la classification périodique des éléments, de préférence le niobium, et éventuellement un élément du groupe VIIA, de préférence le fluor. De plus, la présente invention concerne les procédés d'hydrocraquage, d'hydroconversion et d'hydrotraitement mettant en oeuvre ce catalyseur.

Intérêt de l'invention

Ledit matériau amorphe comprenant du silicium à porosité hiérarchisée et organisée constitué d'une matrice inorganique mésostructurée, à base d'oxyde de silicium, aux parois amorphes et microporeuses, présente simultanément les propriétés structurales et texturales propres aux matériaux à base d'oxyde de silicium et, plus précisément, aux matériaux aluminosilicates mésostructurés, ainsi que des propriétés d'acido-basicité supérieures aux propriétés d'acido-basicité présentées par les matériaux aluminosilicates amorphes antérieurs, dépourvus de précurseurs d'entités proto-zéolithiques, et préparés selon des protocoles de synthèse bien connus de l'Homme du métier utilisant des précurseurs inorganiques de silice et d'alumine. Par ailleurs, la présence au sein d'une même particule sphérique de taille micrométrique voire nanométrique de mésopores organisés dans une matrice inorganique microporeuse et amorphe conduit à un accès privilégié des réactifs et des produits de la réaction aux sites microporeux lors de l'emploi du matériau comme élément constitutif du catalyseur selon l'invention dans des procédés d'hydrocraquage, d'hydroconversion et d'hydrotraitement. De plus, la plus grande proximité des sites acides et hydrogénants résultant d'une dispersion de la phase métallique directement sur la matrice inorganique évite aux molécules déjà craquées sur un premier sites acide d'être à nouveau craquées. De plus, le matériau selon l'invention est constitué de particules élémentaires sphériques, le diamètre de ces particules étant au maximum égal à 200 $\mu$m, de préférence inférieur à 100 $\mu$m, variant avantageusement de 50 nm à 20 $\mu$m, très avantageusement de 50 nm à 10 $\mu$m et de manière encore plus avantageuse de 50 nm à 3 $\mu$m. La taille limitée de ces particules ainsi que leur forme sphérique homogène permet d'avoir une meilleure diffusion des réactifs et des produits de la réaction lors de l'emploi du matériau comme élément constitutif du catalyseur préparé selon l'invention dans des procédés d'hydrocraquage, d'hydroconversion et d'hydrotraitement comparativement à des catalyseurs connus de l'état de la technique.

L'ensemble des propriétés propres au matériau amorphe comprenant du silicium à porosité hiérarchisée et organisée induit donc des propriétés catalytiques spécifiques au catalyseur préparé selon l'invention comprenant ledit matériau lors de son utilisation dans dés procédés d'hydrocraquage, d'hydroconversion et d'hydrotraitement. En effet, les travaux de recherche effectués par le demandeur sur ces solides innovants et sur les phases actives hydro-déshydrogénantes, l'ont conduit à découvrir qu'un catalyseur d'hydrocraquage de charges hydrocarbonées préparé selon l'invention comprenant au moins ledit matériau amorphe comprenant du silicium à porosité hiérarchisée et organisée, au moins un métal hydro-déshydrogénant permet d'obtenir des activités (c'est à dire des niveaux de conversion) élevées par rapport à celles générées par des catalyseurs conventionnels à base d'aluminosilicates amorphes à porosité non organisée et des sélectivités en distillats moyens (carburéacteur et gasoil) plus élevées qu'avec les catalyseurs zéolithiques connus dans l'art antérieur.

*Techniques de caractérisation*

Le catalyseur ainsi que le support formé dudit matériau amorphe comprenant du silicium à porosité hiérarchisée et organisée préparés selon l'invention sont caractérisés par plusieurs techniques d'analyses et notamment par Diffraction des Rayons X aux bas angles (DRX aux bas angles), par Volumétrie à l'azote (BET), par Microscopie Électronique à Transmission (MET) éventuellement couplée à une analyse par spectrométrie de rayons X à sélection d'énergie (EDX), par microsonde de Castaing, par microsonde électronique et par Fluorescence X (FX) ou Absorption Atomique (AA).

La Volumétrie à l'azote qui correspond à l'adsorption physique de molécules d'azote dans la porosité du matériau via une augmentation progressive de la pression à température constante renseigne sur les caractéristiques texturales (diamètre des mésopores, type de porosité, surface spécifique) particulières du catalyseur préparé selon l'invention. En particulier, elle permet d'accéder à la valeur totale du volume microporeux et mésoporeux du support du catalyseur préparé selon l'invention. L'allure de l'isotherme d'adsorption d'azote et de la boucle d'hystérésis peut renseigner sur la présence de la microporosité liée aux entités proto-zéolithiques constituant les parois amorphes de la matrice de chacune des particules sphériques du support du catalyseur préparé selon l'invention et sur la nature de la mésoporosité. Dans l'exposé qui suit, le diamètre des mésospores $\phi$ du support du catalyseur préparé selon l'invention donné correspond au diamètre moyen à la désorption d'azote défini comme étant un diamètre tel que tous les pores inférieurs à ce diamètre constituent 50% du volume poreux (Vp) mesuré sur la branche de désorption de l'isotherme azote. L'analyse quantitative de la microporosité du support du catalyseur selon l'invention est effectuée à partir des méthodes "t" (méthode de Lippens-De Boer, 1965) ou "$\alpha_s$" (méthode proposée par Sing) qui correspondent à des transformées de l'isotherme d'adsorption de départ comme décrit dans l'ouvrage "Adsorption by powders and porous solids. Principles, methodology and applications" écrit par F. Rouquerol, J. Rouquerol et K. Sing, Academic Press, 1999. Ces méthodes permettent d'accéder en particulier à la valeur du volume microporeux caractéristique de la microporosité du support du catalyseur préparé selon l'invention ainsi qu'à la surface spécifique de l'échantillon. Le solide de référence utilisé est une silice LiChrospher Si-1000 (M. Jaroniec, M. Kruck, J. P. Olivier, Langmuir, 1999, 15, 5410). Concernant la matrice mésostructurée du support du catalyseur préparé selon l'invention, la différence entre la valeur du diamètre des mésopores $\phi$ et la distance de corrélation entre mésopores d défini par DRX aux bas angles comme décrit ci-dessous permet d'accéder à la grandeur e où e = d - $\phi$ et est caractéristique de l'épaisseur des parois amorphes de la matrice mésostructurée du support du catalyseur préparé selon l'invention. De même, la courbe $V_{ads}$ (ml/g) = f($\alpha_s$) obtenue via la méthode $\alpha_s$ citée ci-dessus est caractéristique de la présence de microporosité au sein du support du catalyseur et conduit à une valeur du volume microporeux comprise dans une gamme de 0,01 à 0,4 ml/g. La détermination du volume microporeux et mésoporeux total et du volume microporeux comme décrite ci-dessus conduit à une valeur du volume mésoporeux du support du catalyseur préparé selon l'invention dans une gamme de 0,01 à 1 ml/g.

La technique de Diffraction des Rayons X aux bas angles (valeurs de l'angle 2θ comprises entre 0,5 et 3°) permet de caractériser la périodicité à l'échelle nanométrique générée par la mésoporosité organisée du catalyseur selon l'invention. Dans l'exposé qui suit, l'analyse des rayons X est réalisée sur poudre avec un diffractomètre opérant en réflexion et équipé d'un monochromateur arrière en utilisant la radiation du cuivre (longueur d'onde de 1,5406 Å). Les pics habituellement observés sur les diffractogrammes correspondants à une valeur donnée de l'angle 2θ sont associés aux distances inter réticulaires $d_{(hkl)}$ caractéristiques de la symétrie structurale du matériau, ((hkl) étant les indices de Miller du réseau réciproque) par la relation de Bragg : 2 $d_{(hkl)}$ * sin (θ) = n * λ. Cette indexation permet alors la détermination des paramètres de maille (abc) du réseau direct, la valeur de ces paramètres étant fonction de la structure hexagonale, cubique, ou vermiculaire obtenue et caractéristique de l'organisation périodique, c'est à dire, homogène et régulière, des mésopores du catalyseur préparé selon l'invention.

L'analyse par Microscopie Électronique à Transmission (MET) est une technique également largement utilisée pour caractériser la mésostructuration du catalyseur préparé selon l'invention. Celle-ci permet la formation d'une image du solide étudié, les contrastes observés étant caractéristiques de l'organisation structurale, de la texture et de la morphologie des particules observées, la résolution de la technique atteignant au maximum 0,2 nm. L'analyse de l'image permet également d'accéder aux paramètres d et $\phi$ caractéristiques du catalyseur préparé selon l'invention et définis précédemment.

La répartition et la localisation des éléments constituant la phase hydrogénante peuvent être déterminées par des techniques telles que la microsonde de Castaing (profil de répartition des divers éléments), la Microscopie Électronique à Transmission couplée à une analyse X des composants du catalyseurs (EDX), ou bien encore par l'établissement d'une cartographie de répartition des éléments présents dans le catalyseur par microsonde électronique. Ces techniques permettent de mettre en évidence la présence de ces éléments exogènes ajoutés après la synthèse du matériau amorphe à porosité hiérarchisée et organisée comprenant du silicium constitutif du catalyseur préparé selon l'invention. La répartition et la localisation des éléments du groupe VIB tels que le molybdène, le tungstène, du groupe VIII tels que le fer, le cobalt, le nickel, le platine, le palladium, du groupe VB tel que le niobium, du groupe VIIA tel que le fluor, peuvent être déterminées selon ces techniques. De même, la répartition et la localisation du bore, du silicium et du phosphore peuvent être déterminées selon ces techniques.

La composition globale du catalyseur préparé selon l'invention peut être déterminée par Fluorescence X (FX) sur le catalyseur à l'état pulvérulent ou par Absorption Atomique (AA) après attaque acide du catalyseur.

*Exposé détaillé de l'invention*

Plus précisément, l'invention porte sur un procédé de préparation d'un catalyseur comprenant :

- la préparation d'au moins un support formé d'au moins un matériau amorphe comprenant du silicium à porosité hiérarchisée et organisée, constitué d'au moins deux particules sphériques élémentaires, chacune desdites particules comprenant une matrice à base d'oxyde de silicium, mésostructurée, ayant un diamètre de mésopores compris entre 1,5 et 30 nm et présentant des parois amorphes et microporeuses entièrement constituées d'entités proto-zéolithiques d'épaisseur comprise entre 1,5 et 50 nm, lesdites particules sphériques élémentaires ayant un diamètre maximal de 200 microns.
- le mélange dudit matériau à porosité hiérarchisée et organisée avec au moins une phase active contenant au moins un élément hydro-déshydrogénant du groupe VIB et /ou du groupe VIII de la classification périodique, selon la revendication 1.

Conformément à l'invention, l'élément du groupe VIB est avantageusement présent à une teneur massique en oxyde métallique comprise entre 0,1 et 40%, de manière préférée entre 1,5 et 35%, et de manière encore plus préférée entre 3 et 35%, les pourcentages étant exprimés en % poids par rapport à la masse totale du catalyseur et l'élément du groupe VIII est avantageusement présent à une teneur massique en métal comprise entre 0,1 et 25%, de manière préférée entre 0,1 et 20% et de manière encore plus préférée entre 0,1 et 15%, ledit matériau à porosité hiérarchisée est avantageusement présent à une teneur massique comprise entre 20 et 99,9%, de préférence entre 30 et 99,9% et de manière encore plus préférée entre 40 et 99,9%.

Le catalyseur préparé selon l'invention comprend :

- éventuellement au moins un élément dopant choisi dans le groupe constitué par le silicium (en plus du silicium contenu dans ledit matériau à porosité hiérarchisée présent dans le catalyseur préparé selon l'invention), le bore et le phosphore, présent à une teneur massique comprise entre 0 et 20%, de préférence entre 0,1 et 15%, de manière préférée entre 0,1 et 10% et de manière encore plus préférée entre 0,2 et 5%,
- éventuellement au moins un élément du groupe VB, de préférence le niobium, présent à une teneur massique comprise entre 0 et 60%, de préférence entre 0,1 et 50%, et de manière encore plus préférée entre 0,1 et 40%,
- éventuellement au moins un élément du groupe VIIA, de préférence le fluor, présent à une teneur massique comprise entre 0 et 20%, de préférence entre 0,1 et 15% et de manière encore plus préférée entre 0,1 et 10%,
- éventuellement un liant tel que la silice, l'alumine, les argiles, l'oxyde de titane, l'oxyde de bore et la zircone et tout mélange des liants précédemment cités. Les liants préférés sont la silice et l'alumine et de manière encore plus préférée l'alumine. La teneur pondérale en liant sur le catalyseur est comprise entre 0 et 30%, de manière préférée entre 0 et 20%. Le catalyseur préparé selon l'invention est préférentiellement dépourvu de liant.

Selon un premier mode de réalisation du catalyseur préparé selon l'invention, l'élément hydro-déshydrogénant de ladite phase active comprise dans ledit catalyseur est un élément choisi dans le groupe formé par les éléments du groupe VIB et est de préférence choisi parmi le molybdène et le tungstène.

Selon un mode préféré dudit premier mode de réalisation du catalyseur préparé selon l'invention, l'élément hydro-déshydrogénant de ladite phase active comprise dans ledit catalyseur est un élément choisi dans le groupe formé par les éléments du groupe VIB de la classification périodique est le molybdène.

Selon un autre mode préféré dudit premier mode de réalisation du catalyseur préparé selon l'invention, l'élément hydro-déshydrogénant choisi dans le groupe formé par les éléments du groupe VIB de la classification périodique est le tungstène.

Selon un deuxième mode de réalisation dudit catalyseur préparé selon l'invention, l'élément hydro-déshydrogénant de ladite phase active comprise dans ledit catalyseur est un élément choisi dans le groupe formé par les éléments du groupe VIII et est de préférence choisi parmi le fer, le cobalt, le nickel, le ruthénium, le rhodium, le palladium, l'osmium, l'iridium ou le platine, pris seuls ou en mélange, de manière très préférée choisi parmi le fer, le cobalt, le nickel, le platine, le palladium et le ruthénium, pris seuls ou en mélange, et de manière encore plus préférée choisi parmi le cobalt, le nickel et le platine, pris seuls ou en mélange.

Selon un mode préféré dudit deuxième mode de réalisation du catalyseur préparé selon l'invention, l'élément hydro-déshydrogénant choisi dans le groupe formé par les éléments du groupe VIII de la classification périodique, est le cobalt.

Selon un autre mode préféré dudit deuxième mode de réalisation du catalyseur préparé selon l'invention, l'élément hydro-déshydrogénant choisi dans le groupe formé par les éléments du groupe VIII de la classification périodique, est le nickel.

Selon encore un autre mode encore plus préféré dudit deuxième mode de réalisation du catalyseur préparé selon l'invention, l'élément hydro-déshydrogénant choisi dans le groupe formé par les éléments du groupe VIII de la classification périodique, est le platine.

Selon un troisième mode de réalisation du catalyseur préparé selon l'invention, ladite phase active comprise dans ledit catalyseur est formé d'au moins un élément du groupe VIB et d'au moins un élément du groupe VIII.

Conformément audit troisième mode de réalisation du catalyseur préparé selon l'invention, et d'une manière avantageuse on utilise comme phase active les associations de métaux suivantes : nickel-molybdène, cobalt-molybdène, fer-molybdène, fer-tungstène, nickel-tungstène, cobalt-tungstène, platine-palladium, de préférence les associations nickel-molybdène, cobalt-molybdène, cobalt-tungstène, nickel-tungstène et de façon encore plus préférée les associations nickel-moybdène et nickel-tungstène.

Il est également possible d'utiliser comme phase active des associations de trois métaux par exemple nickel-cobalt-molybdène, nickel-molybdène-tungstène, nickel-cobalt-tungstène, etc.. D'une manière avantageuse on utilise les associations de métaux suivantes : nickel-niobium-molybdène, cobalt-niobium-molybdène, fer-niobium-molybdène, nickel-niobium-tungstène, cobalt-niobium-tungstène, fer-niobium-tungstène et de préférence les associations nickel-niobium-molybdène, cobalt-niobium-molybdène.

Il est également possible d'utiliser comme phase active des associations de quatre métaux par exemple nickel-cobalt-niobium-molybdène. On peut également utiliser des associations contenant un métal noble tel que ruthénium-niobium-molybdène, ou encore ruthénium-nickel-niobium-molybdène.

Conformément à l'invention, ledit matériau amorphe comprenant du silicium à porosité hiérarchisée et organisée est constitué d'au moins deux particules sphériques élémentaires, chacune desdites particules comprenant une matrice à base d'oxyde de silicium, mésostructurée, ayant un diamètre de mésopores compris entre 1,5 et 30 nm et présentant des parois amorphes et microporeuses d'épaisseur comprise entre 1,5 et 50 nm, lesdites particules sphériques élémentaires ayant un diamètre maximal de 200 microns.

Le matériau présent dans le catalyseur préparé selon l'invention est un matériau à porosité hiérarchisée dans les domaines de la microporosité et de la mésoporosité et organisée dans le domaine de la mésoporosité. Par matériau à porosité hiérarchisée et organisée, on entend au sens de la présente invention un matériau présentant une double porosité à l'échelle de chacune desdites particules sphériques : une mésoporosité, c'est-à-dire la présence de pores organisés à l'échelle mésoporeuse ayant un diamètre uniforme compris entre 1,5 et 30 nm, de préférence entre 4 et 30 nm et de manière très préférée entre 5 et 20nm, répartis de façon homogène et régulière dans chacune desdites particules (mésostructuration) et une microporosité induite par les parois amorphes, les caractéristiques de cette microporosité étant fonction des entités proto-zéolithiques constitutives des parois amorphes de la matrice de chacune des particules sphériques du matériau à porosité hiérarchisée et organisée présent dans le catalyseur selon l'invention: La microporosité se caractérise par la présence de micropores, au sein desdites parois amorphes, ayant un diamètre inférieur à 1,5 nm. Le support constitutif du catalyseur préparé selon l'invention présente également une(des) macroporosité(s) texturale(s) intra ou(/et) interparticulaire. Il est à noter qu'une porosité de nature microporeuse peut également résulter de l'imbrication du tensioactif, utilisé lors de la préparation du matériau à porosité hiérarchisée et organisée présent dans le catalyseur préparé selon l'invention, avec la paroi inorganique au niveau de l'interface organique-inorganique développée lors de la mésostructuration de la composante inorganique dudit matériau à porosité hiérarchisée et organisée présent dans le catalyseur préparé selon l'invention. Avantageusement aucune des particules sphériques constituant le matériau présent dans le catalyseur préparé selon l'invention ne présente de macropores.

La matrice à base d'oxyde de silicium formant chacune des particules sphériques du matériau à porosité hiérarchisée et organisée présent dans le catalyseur préparé selon l'invention présente avantageusement des parois amorphes entièrement constituées d'entités proto-zéolithiques, lesquelles sont à l'origine de la microporosité présente au sein de chacune des particules sphériques du matériau présent dans le catalyseur préparé selon l'invention. Les entités proto-zéolitiques sont des espèces préparées à partir de réactifs utilisés pour la synthèse de zéolithes ou de solides apparentés, la préparation desdites espèces n'ayant pas été menée jusqu'au stade de la formation de zéolithes cristallisées et des solides apparentés correspondants. Il en résulte que lesdites entités proto-zéolithiques, de petite taille, ne sont pas détectées lorsqu'elles sont caractérisées par diffraction des rayons X aux grands angles. Plus précisément et conformément à l'invention, les entités proto-zéolithiques constituant intégralement et de façon homogène les parois microporeuses amorphes de la matrice de chacune des particules sphériques du matériau présent dans le catalyseur préparé selon l'invention sont des espèces résultant de la mise en présence d'au moins un agent structurant, au moins un précurseur silicique et au moins un précurseur d'au moins un élément X, dans des conditions variables de temps et de température permettant d'aboutir à une solution limpide, lesdites espèces pouvant servir d'amorce à la synthèse de toute zéolithe ou solide apparenté développant des propriétés d'acidité et en particulier mais de façon non restrictive celle répertoriées dans "Atlas of zeolite framework types", 5th revised Edition, 2001, C. Baerlocher, W. M. Meier, D. H. Olson. Il en résulte que ladite matrice à base d'oxyde de silicium comprend, en outre, au moins un élément X, la nature chimique de X étant fonction de la nature chimique desdites entités proto-zéolithiques employées et étant choisi parmi l'aluminium, le fer, le germanium, le bore et le titane. Avantageusement, X est l'élément aluminium. Dans ce cas, la matrice du matériau présent dans le catalyseur préparé selon l'invention est un aluminosilicate amorphe, précurseur d'un matériau aluminosilicate cristallisé. Cet aluminosilicate amorphe présente un rapport molaire Si/Al égal à celui de la solution des précurseurs silicique et aluminique conduisant à la formation des entités proto-zéolithiques constituant intégralement les parois amorphes et microporeuses de la matrice.

On entend par zéolithe ou solide apparenté bien connus de l'Homme du métier l'ensemble des solides oxydes microporeux cristallisés dont les éléments atomiques constitutifs de la charpente inorganique présentent une coordinance IV. Par définition, la dénomination "zéolithe" est attribuée auxdits solides oxydes microporeux siliciques ou aluminosiliciques. De même, la dénomination "solide apparenté" concerne l'ensemble des solides oxydes microporeux cristallisés dont les éléments atomiques constitutifs de la charpente inorganique présentent une coordinance IV, lesdits solides oxydes microporeux siliciques ou aluminosiliciqués étant exclus. Toute zéolithe ou solide apparenté présentant au moins un élément atomique trivalent à l'origine de la présence d'une charge négative de ladite charpente et qui peut être compensé par une charge positive de nature protonique peut développer des propriétés d'acidité. En particulier, les zéolithes de type aluminosilicate et les solides apparentés de type silicoaluminosphosphate développent de telles propriétés.

Les entités proto-zéolithiques qui constituent intégralement les parois amorphes de la matrice de chacune des particules du matériau présent dans le catalyseur préparé selon l'invention et à l'origine de la microporosité de celui-ci sont des espèces pour l'amorce d'au moins une zéolithe choisie parmi les aluminosilicates ZSM-5, ZSM-48, ZSM-22, ZSM-23, ZBM-30, EU-1, EU-2, EU-11, Bêta, zéolithe A, Y, USY, VUSY, SDUSY, mordénite, NU-87, NU-88, NU-86, NU-85, IM-5, IM-12, IZM-2 et Ferriérite et/ou au moins un solide apparenté choisi parmi les silicoaluminophosphates SAPO-11 et SAPO-34. De manière très préférée, les entités proto-zéolithiques constituant intégralement les parois amorphes et microporeuses de la matrice de chacune des particules du matériau présent dans le catalyseur préparé selon l'invention sont des espèces pour l'amorce d'au moins une zéolithe choisie parmi les aluminosilicates de type structural MFI, BEA, FAU, LTA et/ou au moins un solide apparenté choisie parmi les silicoaluminophosphates de type structural AEL, CHA.

La matrice à base d'oxyde de silicium, comprise dans chacune des particules sphériques constituant le matériau présent dans le catalyseur préparé selon l'invention, est mésostructurée : elle présente des mésopores ayant un diamètre uniforme compris entre 1,5 et 30 nm de préférence entre 4 et 30 nm et de manière très préférée entre 5 et 20 nm, répartis de façon homogène et régulière dans chacune des particules sphériques. La matière située entre les mésopores de chacune desdites particules sphériques est micoporeuse et intégralement amorphe et forme des parois, ou murs, dont l'épaisseur est comprise entre 1 et 50 nm, de préférence entre 2,5 et 30 nm et de manière très préférée entre 4 et 30 nm. L'épaisseur des parois correspond à la distance séparant un premier mésopore d'un second mésopore, le second mésopore étant le pore le plus proche dudit premier mésopore. L'organisation de la mésoporosité décrite ci-dessus conduit à une structuration de la matrice à base d'oxyde de silicium, laquelle peut être hexagonale, vermiculaire ou cubique et de façon préférée vermiculaire, en fonction de la nature du tensioactif utilisé pour la mise en oeuvre du matériau présent dans le catalyseur préparé selon l'invention. L'analyse DRX aux petits angles permet de calculer la distance d de corrélation entre les mésopores organisés dudit matériau : la distance d de corrélation entre les mésopores organisés dudit matériau est comprise entre 6 et 50 nm, de préférence entre 8 et 30 nm et de manière très préférée entre 9 et 25 nm.

L'analyse par RMN MAS du solide de 27Al, dans le cas où l'élément X est l'aluminium, conduit à l'obtention de spectres RMN 27Al du matériau présent dans le catalyseur préparé selon l'invention et du catalyseur préparé selon l'invention se caractérisant par la présence de 2 ou 3 pics respectivement associés à la présence d'atomes d'aluminium en coordinence IV et VI ou à la présence d'atomes d'aluminium en coordinence IV, V et VI. Les déplacements chimiques desdits atomes en coordinence IV, V et VI ainsi observés sont respectivement de l'ordre de 50, 30 et 0 ppm. La détermination quantitative des différents atomes d'aluminium indique que les espèces aluminiques en coordinence V et/ou VI représentent au moins 10% molaire, de préférence au moins 15% molaire et de façon encore plus préférée au moins 20% molaire de l'ensemble des espèces aluminiques.

Par ailleurs, le matériau présent dans le catalyseur préparé selon l'invention et le catalyseur préparé selon l'invention ne conduisent à aucun signal lorsqu'ils sont analysés par IRTF (Infra-Rouge par transformée de Fourier). En particulier, ils ne présentent pas la bande visible par analyse IRTF à 550 - 600 cm-1 caractéristique des espèces pentasils d'entités zéolthiques de type MFI.

Conformément à l'invention, lesdites particules sphériques élémentaires constituant le matériau à porosité hiérarchisée et organisée présent dans le catalyseur préparé selon l'invention ont un diamètre maximal égal à 200 microns, de préférence inférieur à 100 microns, avantageusement compris entre 50 nm et 20 $\mu$m, très avantageusement compris entre 50 nm et 10 $\mu$m, et de manière encore plus avantageuse compris entre 50 nm et 3 $\mu$m. Plus précisément, elles sont présentes dans le matériau présent dans le catalyseur préparé selon l'invention sous la forme d'agrégats.

Le matériau à porosité hiérarchisée et organisée présent dans le catalyseur préparé selon l'invention présente avantageusement une surface spécifique comprise entre 100 et 1100 m$^2$/g et de manière très avantageuse comprise entre 200 et 1000 m$^2$/g.

Le matériau à porosité hiérarchisée et organisée présent dans le catalyseur préparé selon l'invention présente avantageusement un volume mésoporeux mesuré par Volumétrie à l'azote compris entre 0,01 et 1 ml/g, de préférence entre 0,01 et 0,8 ml/g et un volume microporeux mesuré par Volumétrie à l'azote compris entre 0,01 et 0,4 ml/g.

Le catalyseur préparé selon l'invention présente avantageusement une surface spécifique comprise entre 70 et 1000 $m^2/g$ et de manière très avantageuse comprise entre 80 et 800 $m^2/g$.

Le catalyseur préparé selon l'invention présente avantageusement un diamètre mésoporeux moyen compris entre 1,5 et 30 nm et de manière très avantageuse comprise entre 3 et 15 nm.

Conformément à l'invention, le matériau à porosité hiérarchisée et organisée comprenant du silicium constitutif du catalyseur préparé selon l'invention est obtenu selon le procédé de préparation qui comprend : a) la préparation d'une solution limpide contenant les éléments précurseurs d'entités proto-zéolithiques, à savoir au moins un agent structurant, au moins un précurseur silicique et au moins un précurseur d'au moins un élément X, X étant avantageusement l'aluminium ; b) le mélange en solution d'au moins un tensioactif et d'au moins ladite solution limpide obtenue selon a) tel que le rapport des volumes des matières inorganique et organique soit compris entre 0,26 et 4 ; c) l'atomisation par aérosol de ladite solution obtenue à l'étape b) pour conduire à la formation de gouttelettes sphériques ; d) le séchage desdites gouttelettes et e) l'élimination dudit agent structurant et dudit tensioactif pour l'obtention d'un matériau amorphe à porosité hiérarchisée dans la gamme de la microporosité et de la mésoporosité et organisée dans la gamme de la mésoporosité. Par la suite ce procédé est appelé "procédé de préparation du matériau à porosité hiérarchisée et organisée".

Conformément à l'étape a) du procédé de préparation du matériau à porosité hiérarchisée et organisée, la solution limpide contenant les éléments précurseurs d'entités proto-zéolithiques, à savoir au moins un agent structurant, au moins un précurseur silicique et au moins un précurseur d'au moins un élément X, X étant avantageusement l'aluminium, est réalisée à partir de protocoles opératoires connus de l'Homme du métier.

Le précurseur silicique utilisé pour la mise en oeuvre de l'étape a) du procédé de préparation du matériau à porosité hiérarchisée et organisée est choisi parmi les précurseurs d'oxyde de silicium bien connus de l'Homme du métier. En particulier, on utilise un précurseur silicique choisi parmi les précurseurs de silice habituellement utilisés dans la synthèse des zéolithes ou de solides apparentés : la silice solide en poudre, l'acide silicique, la silice colloïdale, la silice dissoute ou le tétraéthoxysilane encore appelé tétraéthylorthosilicate (TEOS). De manière préférée, le précurseur silicique est le TEOS.

Le précurseur de l'élément X, utilisé pour la mise en oeuvre de l'étape a) du procédé de préparation du matériau à porosité hiérarchisée et organisée, peut être tout composé comprenant l'élément X et pouvant libérer cet élément en solution, notamment en solution aqueuse ou aquo-organique, sous forme réactive. Dans le cas où X est l'aluminium, le précurseur aluminique est avantageusement un sel inorganique d'aluminium de formule $AlZ_3$, Z étant un halogène, un nitrate ou un hydroxyde. De préférence, Z est le chlore. Le précurseur aluminique peut également être un sulfate d'aluminium de formule $Al_2(SO_4)_3$. Le précurseur aluminique peut être aussi un précurseur organométallique de formule $Al(OR)_3$ ou R = éthyle, isopropyle, n-butyle, s-butyle ($Al(O^sC_4H_9)_3$) ou t-butyle ou un précurseur chélaté tel que l'aluminium acétylacétonate ($Al(C_5H_8O_2)_3$). De préférence, R est le s-butyle. Le précurseur aluminique peut aussi être de l'aluminate de sodium ou d'ammonium ou de l'alumine proprement dite sous l'une de ses phases cristallines connues de l'Homme du métier (alpha, delta, teta, gamma), de préférence sous forme hydratée ou qui peut être hydratée.

On peut également utiliser des mélanges des précurseurs cités ci-dessus. Certains ou l'ensemble des précurseurs aluminiques et siliciques peuvent éventuellement être ajoutés sous la forme d'un seul composé comprenant à la fois des atomes d'aluminium et des atomes de silicium, par exemple une silice-alumine amorphe.

L'agent structurant utilisé pour la mise en oeuvre de l'étape a) du procédé de préparation du matériau à porosité hiérarchisée et organisée peut être ionique ou neutre selon la nature de la zéolithe ou du solide apparenté qui serait obtenu à partir desdites entités proto-zéolithiques. Selon l'invention, on utilise les agents structurants suivants : des cations organiques azotés tels que le tétrapropylammonium (TPA), des éléments de la famille des alcalins (Cs, K, Na, etc.), des éthercouronnes, des diamines ainsi que tout autre agent structurant bien connu de l'Homme du métier pour la synthèse de zéolithe ou de solide apparenté.

On obtient généralement la solution limpide contenant les éléments précurseurs d'entités proto-zéolithiques selon l'étape a) du procédé de préparation du matériau à porosité hiérarchisée et organisée en préparant un mélange réactionnel renfermant au moins un précurseur silicique, au moins un précurseur d'au moins un élément X, X étant avantageusement l'aluminium, et au moins un agent structurant. Le mélange réactionnel est soit aqueux soit aquo-organique, par exemple un mélange eau-alcool. Selon l'invention, on travaille dans un milieu réactionnel basique au cours des diverses étapes du procédé de préparation du matériau à porosité hiérarchisée et organisée afin de favoriser le développement des entités proto-zéolithiques constituant les parois amorphes et microporeuses de la matrice de chacune des particules du matériau présent dans le catalyseur préparé selon l'invention. La basicité de la solution est assurée par la basicité de l'agent structurant employé ou bien par basification du mélange réactionnel par l'ajout d'un composé basique, choisi parmi les hydroxydes de métal alcalin, de préférence de l'hydroxyde de sodium. Le mélange réactionnel est mis sous conditions hydrothermales sous une pression autogène, éventuellement en ajoutant un gaz, par exemple de l'azote, à une température comprise entre la température ambiante et 200°C, de préférence entre la température ambiante et 170°C et de manière encore préférentielle à une température qui ne dépasse pas 120°C jusqu'à la formation d'une solution limpide contenant les éléments précurseurs des entités proto-zéolithiques constituant les parois amorphes et microporeuses de la matrice de chacune des particules sphériques du matériau présent dans le catalyseur préparé selon l'invention. Selon un mode opératoire préféré, le mélange réactionnel renfermant au moins un agent structurant, au moins un précurseur silicique et au moins un précurseur d'au moins un élément X, X étant avantageusement l'aluminium est mûri à température ambiante de façon à obtenir une solution limpide contenant les éléments précurseurs d'entités proto-zéolithiques susceptibles de générer la formation d'entités zéolithiques cristallisées.

Conformément à l'étape a) du procédé de préparation du matériau à porosité hiérarchisée et organisée, les éléments précurseurs des entités proto-zéolithiques présents dans la solution limpide sont synthétisés selon des protocoles opératoires connus de l'Homme du métier. En particulier, pour un matériau selon l'invention dont la matrice de chaque particule sphérique est constituée d'entités proto-zéolithiques bêta, une solution limpide contenant des éléments précurseurs d'entités proto-zéolithiques bêta est réalisée à partir du protocole opératoire décrit par P. Prokesova, S. Mintova, J. Cejka, T. Bein et coll., Micropor. Mesopor. Mater., 2003, 64, 165. Pour un matériau selon l'invention dont la matrice de chaque particule sphérique est constituée d'entités proto-zéolithiques de type FAU, une solution limpide contenant des éléments précurseurs d'entités proto-zéolithiques de type FAU est réalisée à partir des protocoles opératoires décrits par Y. Liu, W. Z. Zhang, T. J. Pinnavaia et coll., J. Am. Chem. Soc., 2000, 122, 8791 et K. R. Kloetstra, H. W. Zandbergen, J. C. Jansen, H. vanBekkum, Microporous Mater., 1996, 6, 287. Pour un matériau selon l'invention dont la matrice de chaque particule sphérique est constituée d'entités proto-zéolithiques ZSM-5, une solution limpide contenant des éléments précurseurs d'entités proto-zéolithiques ZSM-5 est réalisée à partir du protocole opératoire décrit par A. E. Persson, B. J. Schoeman, J. Sterte, J. -E. Otterstedt, Zéolites, 1995, 15, 611.

Conformément à l'étape b) du procédé de préparation du matériau à porosité hiérarchisée et organisée, le tensioactif utilisé est un tensioactif ionique ou non ionique ou un mélange des deux, de préférence le tensioactif utilisé est un tensioactif non ionique. De préférence, le tensioactif ionique est choisi parmi des tensioactifs anioniques tels que les sulfates comme par exemple le dodécylsulfate de sodium (SDS). De préférence, le tensioactif non ionique peut être tout copolymère possédant au moins deux parties de polarités différentes leur conférant des propriétés de macromolécules amphiphiles. Ces copolymères peuvent comporter au moins un bloc faisant partie de la liste non exhaustive des familles de polymères suivantes : les polymères fluorés (-[$CH_2$-$CH_2$-$CH_2$-$CH_2$-O-CO-R1- avec R1 = $C_4F_9$, $C_8F_{17}$, etc.), les polymères biologiques comme les polyacides aminés (poly-lysine, alginates, etc.), les dendrimères, les polymères constitués de chaînes de poly(oxyde d'alkylène). Tout autre copolymère à caractère amphiphile connu de l'Homme du métier peut être utilisé s'il permet d'obtenir une solution stable dans l'étape b) du procédé de préparation du matériau à porosité hiérarchisée et organisée, comme le poly(styrene-b-acrylamide) par exemple (S. Förster, M. Antionnetti, Adv.Mater, 1998, 10, 195 ; S. Förster, T. Plantenberg, Angew. Chem. Int. Ed, 2002, 41, 688 ; H. Cölfen, Macromol. Rapid Commun, 2001, 22, 219). De manière préférée, on utilise dans le cadre de la présente invention un copolymère bloc constitué de chaînes de poly(oxyde d'alkylène). Ledit copolymère bloc est de préférence un copolymère bloc ayant deux, trois ou quatre blocs, chaque bloc étant constitué d'une chaîne de poly(oxyde d'alkylène). Pour un copolymère à deux blocs, l'un des blocs est constitué d'une chaîne de poly(oxyde d'alkylène) de nature hydrophile et l'autre bloc est constitué d'une chaîne de poly(oxyde d'alkylène) de nature hydrophobe. Pour un copolymère à trois blocs, l'un au moins des blocs est constitué d'une chaîne de poly(oxyde d'alkylène) de nature hydrophile tandis que l'un au moins des autres blocs est constitué d'une chaîne de poly(oxyde d'alkylène) de nature hydrophobe. De préférence, dans le cas d'un copolymère à trois blocs, les chaînes de poly(oxyde d'alkylène) de nature hydrophile sont des chaînes de poly(oxyde d'éthylène) notées $(PEO)_x$ et $(PEO)_z$ et les chaînes de poly(oxyde d'alkylène) de nature hydrophobe sont des chaînes de poly(oxyde de propylène) notées (PPO)y, des chaînes de poly(oxyde de butylène), ou des chaînes mixtes dont chaque chaîne est un mélange de plusieurs monomères d'oxyde d'alkylène. De manière très préférée, dans le cas d'un copolymère à trois blocs, celui-ci est constitué de deux chaînes de poly(oxyde d'éthylène) et d'une chaîne de poly(oxyde de propylène). Plus précisément, on utilise un composé de formule $(PEO)_x$-$(PPO)_y$-$(PEO)_z$ où x est compris entre 5 et 300 et y est compris entre 33 et 300 et z est compris entre 5 et 300. De préférence, les valeurs de x et z sont identiques. On utilise très avantageusement un composé dans lequel x = 20, y = 70 et z = 20 (P123) et un composé dans lequel x = 106, y = 70 et z = 106 (F127). Les tensioactifs non-ioniques commerciaux connus sous le nom de Pluronic (BASF), Tetronic (BASF), Triton (Sigma), Tergitol (Union Carbide), Brij (Aldrich) sont utilisables en tant que tensioactifs non-ioniques dans l'étape b) du procédé de préparation du matériau à porosité hiérarchisée et organisée. Pour un copolymère à quatre blocs, deux des blocs sont constitués d'une chaîne de poly(oxyde d'alkylène) de nature hydrophile et les deux autres blocs sont constitués d'une chaîne de poly(oxyde d'alkylène) de nature hydrophobe.

La solution obtenue à l'issue de l'étape b) du procédé de préparation du matériau à porosité hiérarchisée et organisée dans laquelle sont mélangés au moins ledit tensioactif et au moins ladite solution limpide obtenue selon l'étape a) est basique. Selon l'invention, ladite solution présente un pH supérieur à 9, cette valeur du pH étant imposée par le pH de la solution limpide contenant les éléments précurseurs d'entités proto-zéolithiques obtenue selon l'étape a) du procédé de préparation du matériau à porosité hiérarchisée et organisée. La solution obtenue à l'issue de l'étape b) peut être aqueuse ou peut être un mélange eau-solvant organique, le solvant organique étant préférentiellement un solvant polaire, notamment un alcool, préférentiellement de l'éthanol.

La quantité en composés organiques, c'est à dire en tensioactif et en agent structurant, présente dans le mélange conformément à l'étape b) du procédé de préparation du matériau à porosité hiérarchisée et organisée est définie par rapport à la quantité de matière inorganique présente dans ledit mélange à la suite de l'ajout de la solution limpide contenant les éléments précurseurs d'entités proto-zéolithiques obtenue selon l'étape a) du procédé de préparation du matériau à porosité hiérarchisée et organisée. La quantité de matière inorganique correspond à la quantité de matière du précurseur silicique et à au moins celle du précurseur de l'élément X. Le rapport volumique Vi,organique-Norganique dans le mélange obtenu après la mise en oeuvre de l'étape b) est tel que le système binaire organique-inorganique formé lors de l'étape d'atomisation c) du procédé de préparation du matériau à porosité hiérarchisée et organisée subisse un processus de mésostructuration par auto-assemblage du tensioactif conjointement aux réactions d'hydrolyse/condensation des divers précurseurs inorganiques. Ledit rapport volumique $V_{inorganique}/V_{organique}$ est défini comme suit : $V_{inorganique}/V_{organique} = (m_{inorg} * \rho_{org}) / (m_{org} * \rho_{inorg})$ où $m_{inorg}$ est la masse finale de la fraction inorganique sous forme d'oxyde(s) condensé(s) dans la particule élémentaire solide obtenue par atomisation, $m_{org}$ est la masse totale de la faction organique non volatile se retrouvant dans la particule élémentaire solide obtenue par atomisation, $\rho_{org}$ et $\rho_{inorg}$ sont les densités respectivement associées aux fractions organique non volatile et inorganique. Dans le cadre de l'invention, lorsque l'élément X est l'aluminium et pour une simplification des calculs (approximations valables pour une grande majorité de fraction organique non volatile et pour une fraction inorganique du type "réseau alumino-silicate"), on considère que $\rho_{org} = 1$ et $\rho_{inorg} = 2$. Dans le cadre de l'invention, $m_{inorg}$ correspond généralement à la masse de $SiO_2$ additionnée de celle de la masse de $AlO_2$ lorsque X est l'aluminium, et $m_{org}$ correspond à la masse de l'agent structurant, par exemple TPAOH, additionnée de la masse du tensioactif, par exemple le tensioactif F127. Le solvant polaire préférentiellement l'éthanol, ainsi que l'eau et la soude, n'entrent pas en compte dans le calcul dudit rapport $V_{inorganique}/V_{organique}$. Les espèces comprenant un élément X, avantageusement les espèces aluminiques, pour la préparation du matériau présent dans le catalyseur préparé selon l'invention, introduites après la mise en oeuvre de ladite étape b) ne sont pas prises en compte pour le calcul du rapport volumique $V_{inorganique}/V_{organique}$ défini ci-dessus. Conformément à l'invention, la quantité de matière organique et la quantité de matière inorganique dans le mélange obtenu après la mise en oeuvre de l'étape b) est tel que le rapport $V_{inorganique}/V_{organique}$ est compris dans une gamme de 0,26 à 4 et de façon préférée dans une gamme de 0,30 à 2. Conformément à l'étape b) du procédé de préparation du matériau à porosité hiérarchisée et organisée, la concentration initiale en tensioactif, introduit dans le mélange, définie par $c_0$ est telle que $c_0$ est inférieure ou égale à $c_{mc}$, le paramètre $c_{mc}$ représentant la concentration micellaire critique bien connue de l'Homme du métier, c'est-à-dire la concentration limite au-delà de laquelle se produit le phénomène d'auto-arrangement des molécules du tensioactif dans la solution obtenue à l'issue de l'étape b). Avant atomisation, la concentration en molécules de tensioactif de la solution obtenue à l'issue de l'étape b) du procédé de préparation du matériau à porosité hiérarchisée et organisée ne conduit donc pas à la formation de phases micellaires particulières. Dans une mise en oeuvre préférée du procédé selon l'invention, la concentration $c_0$ est inférieure à la $c_{mc}$, le rapport $V_{inorganique}/V_{organique}$ est tel que la composition du système binaire vérifie les conditions de composition pour lesquelles un mécanisme de mésostructuration se produit par auto- assemblage coopératif des réactifs ($V_{inorganique}/V_{organique}$ compris entre 0,26 et 4, de préférence entre 0,3 et 2) et ladite solution visée à l'étape b) du procédé de préparation du matériau à porosité hiérarchisée et organisée est un mélange eau basique-alcool.

L'étape d'atomisation du mélange selon l'étape c) du procédé de préparation du matériau à porosité hiérarchisée et organisée produit des gouttelettes sphériques. La distribution en taille de ces gouttelettes est de type lognormale. Le générateur d'aérosol utilisé ici est un appareil commercial de modèle 9306 A fourni par TSI ayant un atomiseur 6 jets. L'atomisation de la solution se fait dans une chambre dans laquelle est envoyé un gaz vecteur, un mélange $O_2/N_2$ (air sec), sous une pression P égale à 1,5 bars.

Conformément à l'étape d) du procédé de préparation du matériau à porosité hiérarchisée et organisée, on procède au séchage desdites gouttelettes. Ce séchage est réalisé par le transport desdites gouttelettes via le gaz vecteur, le mélange $O_2/N_2$, dans des tubes en PVC, ce qui conduit à l'évaporation progressive de la solution, par exemple de la solution aquo-organique basique obtenue au cours de l'étape b) du procédé de préparation du matériau à porosité hiérarchisée et organisée, et ainsi à l'obtention de particules élémentaires sphériques. Ce séchage est parfait par un passage desdites particules dans un four dont la température peut être ajustée, la gamme habituelle de température variant de 50 à 600°C et de préférence de 80 à 400°C, le temps de résidence de ces particules dans le four étant de l'ordre de la seconde. Les particules sont alors récoltées sur un filtre. Une pompe placée en fin de circuit favorise l'acheminement des espèces dans le dispositif expérimental aérosol. Le séchage des gouttelettes selon l'étape d) du procédé de préparation du matériau à porosité hiérarchisée et organisée est avantageusement suivi d'un passage à l'étuve à une température comprise entre 50 et 150°C.

Dans le cas particulier où l'élément X, utilisé pour la mise en oeuvre de l'étape a) du procédé de préparation du matériau à porosité hiérarchisée et organisée, est l'élément aluminium et où l'élément sodium est présent dans la solution limpide obtenue conformément à l'étape a) du procédé de préparation du matériau à porosité hiérarchisée et organisée via l'emploi de l'hydroxyde de sodium et/ou d'un agent structurant sodé assurant la basicité de ladite solution limpide, il est préféré de réaliser une étape supplémentaire d'échange ionique permettant d'échanger le cation Na$^+$ par le cation NH$_4^+$ entre les étapes d) et e) du procédé de préparation du matériau à porosité hiérarchisée et organisée. Cet échange, qui conduit à la formation de protons H$^+$ après l'étape e) du procédé de préparation du matériau à porosité hiérarchisée et organisée dans le cas préféré où l'élimination de l'agent structurant et du tensioactif est réalisée par calcination sous air, est réalisé selon des protocoles opératoires bien connus de l'Homme du métier. Une des méthodes usuelles consiste à mettre en suspension les particules solides séchées issues de l'étape d) du procédé de préparation du matériau à porosité hiérarchisée et organisée dans une solution aqueuse de nitrate d'ammonium. L'ensemble est ensuite porté à reflux pendant une durée de 1 à 6 heures. Les particules sont alors récupérées par filtration (centrifugation 9000 tr/min), lavées puis séchées par passage à l'étuve à une température comprise entre 50 et 150°C. Ce cycle d'échange ionique/lavage/séchage peut être reconduit plusieurs fois et de préférence deux autres fois. Ce cycle d'échange peut être également réalisé après les étapes d) et e) du procédé de préparation du matériau à porosité hiérarchisée et organisée. Dans ces conditions, l'étape e) est alors reproduite après le dernier cycle d'échange de façon à générer les protons H$^+$ comme explicité ci-dessus.

Conformément à l'étape e) du procédé de préparation du matériau à porosité hiérarchisée et organisée, l'élimination de l'agent structurant et du tensioactif, afin d'obtenir le matériau présent dans le catalyseur préparé selon l'invention à porosité hiérarchisée dans les domaines de la microporosité et de la mésoporosité et organisée dans le domaine de la mésoporosité, est avantageusement réalisée par des procédés d'extraction chimique ou par traitement thermique et de préférence par calcination sous air dans une gamme de température de 300 à 1000°C et plus précisément dans une gamme de 400 à 600°C pendant une durée de 1 à 24 heures et de façon préférée pendant une durée de 2 à 12 heures.

Dans le cas où la solution visée à l'étape b) du procédé de préparation du matériau à porosité hiérarchisée et organisée est un mélange eau-solvant organique, basique, il est essentiel au cours de l'étape b) du procédé de préparation du matériau à porosité hiérarchisée et organisée que la concentration en tensioactif à l'origine de la mésostructuration de la matrice soit inférieure à la concentration micellaire critique et que le rapport $V_{inorganique}/V_{organique}$ soit compris dans une gamme de 0,26 à 4 et de façon préférée dans une gamme de 0,30 à 2 de sorte que l'évaporation de ladite solution aquo-organique, préférentiellement basique, au cours de l'étape c) du procédé de préparation du matériau à porosité hiérarchisée et organisée par la technique d'aérosol induise un phénomène de micellisation ou d'auto-assemblage conduisant à la mésostructuration de la matrice du matériau présent dans le catalyseur préparé selon l'invention. Lorsque $c_0 < c_{mc}$, la mésostructuration de la matrice du matériau présent dans le catalyseur préparé selon l'invention est consécutive à une concentration progressive, au sein de chaque gouttelette, des éléments précurseurs d'entités proto-zéolithiques de la solution limpide obtenue à l'étape a) du procédé de préparation du matériau à porosité hiérarchisée et organisée et d'au moins un tensioactif introduit lors de l'étape b) du procédé de préparation du matériau à porosité hiérarchisée et organisée, jusqu'à une concentration en tensioactif $c > c_{mc}$ résultant d'une évaporation de la solution aquo-organique, préférentiellement basique.

Selon un premier mode de réalisation préférée du procédé de préparation du matériau à porosité hiérarchisée et organisée, au moins un précurseur d'au moins un élément X, X étant avantageusement l'aluminium, est introduit pour la mise en oeuvre de ladite étape b) du procédé de préparation du matériau à porosité hiérarchisée et organisée. Ainsi, le mélange en solution d'au moins un tensioactif et d'au moins ladite solution limpide obtenue selon l'étape a) du procédé de l'invention est réalisé en présence d'au moins un précurseur dudit élément X, avantageusement parmi les précurseurs aluminiques, décrits plus haut dans la présente description, pour la mise en oeuvre de ladite étape a) du procédé de préparation du matériau à porosité hiérarchisée et organisée. Conformément audit premier mode de réalisation préférée du procédé de préparation du matériau à porosité hiérarchisée et organisée, la préparation de la solution limpide selon l'étape a) du procédé de préparation du matériau à porosité hiérarchisée et organisée est réalisée soit en présence soit en l'absence d'au moins un précurseur d'au moins un élément X.

Selon un deuxième mode de réalisation préférée du procédé de préparation de l'invention, au moins un précurseur d'au moins un élément X, X étant avantageusement l'aluminium, est introduit au cours de la mise en oeuvre de ladite étape d) et/ou de ladite étape e) du procédé de préparation du matériau à porosité hiérarchisée et organisée, en vue de produire une modification de surface du matériau présent dans le catalyseur préparé selon l'invention. Conformément audit deuxième mode de réalisation préférée du procédé de préparation du matériau à porosité hiérarchisée et organisée, ledit précurseur d'au moins un élément X, avantageusement le précurseur aluminique, est introduit au cours de la mise en oeuvre de ladite étape d) et/ou de ladite étape e) par toute technique de modification de surface bien connue de l'Homme du métier telle que le greffage d'au moins un précurseur d'au moins un élément X, l'imprégnation à sec d'au moins un précurseur d'au moins un élément X et l'imprégnation en excès d'au moins un précurseur d'au moins un élément X. Ledit précurseur d'au moins un élément X, avantageusement un précurseur aluminique, introduit au cours de la mise en oeuvre de ladite étape d) et/ou de ladite étape e) du procédé de préparation du matériau à porosité hiérarchisée et organisée par une technique de modification de surface, est choisi parmi les précurseurs dudit élément X, avantageusement parmi les précurseurs aluminiques, décrits plus haut dans la présente description, pour la mise en oeuvre de ladite étape a) du procédé de préparation du matériau à porosité hiérarchisée et organisée.

Conformément audit deuxième mode de réalisation préférée du procédé de préparation du matériau à porosité hiérarchisée et organisée, l'étape a) du procédé de préparation du matériau à porosité hiérarchisée et organisée est réalisée en présence ou en l'absence d'au moins un précurseur d'au moins un élément X, avantageusement un précurseur aluminique, et l'étape b) du procédé de préparation du matériau à porosité hiérarchisée et organisée est réalisée en présence ou en l'absence d'au moins un précurseur d'au moins un élément X, avantageusement un précurseur aluminique.

Conformément au procédé de préparation du matériau à porosité hiérarchisée et organisée, ledit premier mode de réalisation préférée du procédé de préparation du matériau à porosité hiérarchisée et organisée et ledit deuxième mode de réalisation préférée du procédé de préparation du matériau à porosité hiérarchisée et organisée ne sont que des variantes facultatives du procédé de préparation du matériau à porosité hiérarchisée et organisée. Aussi, lorsque la matrice mésostructurée de chacune des particules sphériques du matériau présent dans le catalyseur préparé selon l'invention comporte un élément X, avantageusement l'aluminium, ledit élément X, avantageusement l'aluminium, est introduit soit au cours de ladite étape a) du procédé de préparation du matériau à porosité hiérarchisée et organisée pour la préparation de ladite solution limpide, soit au cours de ladite étape b) conformément audit premier mode de réalisation préférée du procédé de préparation du matériau à porosité hiérarchisée et organisée soit encore au cours de ladite étape d) et/ou de ladite étape e) conformément audit deuxième mode de réalisation préférée du procédé de préparation du matériau à porosité hiérarchisée et organisée. L'élément X, avantageusement l'aluminium, peut également être introduit, plusieurs fois, au cours de la mise en oeuvre de plusieurs étapes selon toutes les combinaisons possibles des modes de réalisation décrits ci-dessus. En particulier, il est avantageux d'introduire l'aluminium au cours de ladite étape a) et de ladite étape b) ou au cours de ladite étape a) et de ladite étape d) et/ou de ladite étape e).

Dans le cas où l'élément X est avantageusement l'aluminium, l'aluminosilicate amorphe obtenu selon le procédé de préparation du matériau à porosité hiérarchisée et organisée présente alors un rapport molaire Si/Al défini à partir de la quantité en élément silicium introduite lors de l'étape a) du procédé de préparation du matériau à porosité hiérarchisée et organisée et de la quantité totale en élément aluminium introduite dans la ou les étape(s) du procédé de préparation du matériau à porosité hiérarchisée et organisée selon les différents modes de réalisation préférée décrits ci-dessus. Dans ces conditions et de manière préférée, la gamme du rapport molaire Si/Al du matériau selon l'invention est comprise entre 0,5 et 1000.

Lorsque ledit premier mode de réalisation préféré du procédé de préparation du matériau à porosité hiérarchisée et organisée est appliqué, les quantités de matière organique et inorganique à introduire pour la mise en oeuvre de l'étape b) sont à ajuster en fonction de la quantité de matière supplémentaire en élément X, avantageusement en aluminium, introduite dans l'étape b) selon ledit premier mode de manière à ce que la quantité totale de matière organique et inorganique introduite pour la préparation du matériau présent dans le catalyseur préparé selon l'invention permette un phénomène de micellisation conduisant à la mésostructuration de la matrice de chaque particule dudit matériau.

Le matériau présent dans le catalyseur préparé selon l'invention à porosité hiérarchisée dans les domaines de la microporosité et de la mésoporosité et organisée dans le domaine de la mésoporosité peut être obtenu sous forme de poudre, de billes, de pastilles, de granulés, ou d'extrudés, les opérations de mises en forme étant réalisées par les techniques classiques connues de l'Homme du métier. De préférence, le matériau présent dans le catalyseur préparé selon l'invention à porosité hiérarchisée dans les domaines de la microporosité et de la mésoporosité et organisée dans le domaine de la mésoporosité est obtenu sous forme de poudre, laquelle est constituée de particules sphériques élémentaires ayant un diamètre maximal de 200 $\mu$m, ce qui facilite la diffusion des réactifs lors de l'emploi du matériau comme élément constitutif du catalyseur préparé selon l'invention dans des procédés d'hydrocraquage, d'hydroconversion et d'hydrotraitement.

Il est à noter que l'étape e) du procédé de préparation du matériau à porosité hiérarchisée et organisée peut être réalisée avant ou après toute étape de mise en forme décrite ci-dessus dudit matériau à porosité hiérarchisée et organisée et comprenant du silicium, de même qu'à toute étape de préparation du catalyseur préparé selon l'invention décrite ci-dessous.

Le catalyseur préparé selon l'invention est préparé selon un procédé comprenant le mélange dudit matériau à porosité hiérarchisée et organisée avec au moins une phase active contenant au moins un élément hydro-déshydrogénant du groupe VIB et/ou VIII.

Le matériau à porosité hiérarchisé et organisée présent dans le catalyseur préparé selon l'invention est calciné au cours de la préparation dudit catalyseur, avantageusement préalablement au mélange avec ladite phase active. Le traitement de calcination est habituellement effectué sous air à une température d'au moins 150°C, de préférence au moins 300°C, de manière plus préférée entre environ 350 et 1000°C et de façon encore plus préférée entre 350 et 800°C. Dans la suite du texte, ledit matériau à porosité hiérarchisée et organisée, éventuellement mis en forme et ayant éventuellement subit un traitement thermique sera dénommé "support" du catalyseur selon l'invention.

Les éléments du groupes VIB et/ou les éléments du groupe VIII et éventuellement ceux choisis parmi le phosphore, le bore, le silicium et éventuellement les éléments des groupes VB et VIIB peuvent être éventuellement introduits, tout ou partie, avant, pendant ou après la mise en forme dudit matériau à porosité hiérarchisée et organisée par toute méthode connue de l'Homme du métier. Lesdits éléments peuvent être introduits après la mise en forme dudit matériau à porosité hiérarchisée et organisée et ce après ou avant le séchage et la calcination dudit matériau mis en forme.

Selon un mode préféré dudit procédé de préparation du catalyseur préparé selon l'invention, la phase active contenant au moins un élément hydrodéshydrogénant du groupe VIB et/ou VIII, éventuellement les éléments choisis parmi le phosphore, le bore, le silicium et éventuellement les éléments des groupes VB et VIIB, peuvent être introduits au cours de la mise en forme dudit matériau à porosité hiérarchisée et organisée.

Selon un autre mode préféré du procédé de préparation du catalyseur préparé selon l'invention, la phase active contenant au moins un élément hydrodéshydrogénant du groupe VIB et/ou VIII, éventuellement les éléments choisis parmi le phosphore, le bore, le silicium et éventuellement les éléments des groupes VB et VIIB, peuvent être introduits par une ou plusieurs opérations d'imprégnation du support, par une solution contenant les précurseurs de ces éléments.

L'introduction du(des) métal(ux) est préférentiellement réalisée par imprégnation du support.

D'une façon préférée, le support est imprégné par une solution aqueuse. L'imprégnation du support est de préférence effectuée par la méthode d'imprégnation dite "à sec" bien connue de l'Homme du métier. L'imprégnation peut être effectuée en une seule étape par une solution contenant l'ensemble des éléments constitutifs du catalyseur final.

Dans le cas où le catalyseur préparé selon la présente invention contient un métal du groupe VIII et un métal du groupe VIB, les métaux du groupe VIII sont de préférence introduits par une ou plusieurs opérations d'imprégnation du support mis en forme et calciné, après ceux du groupe VIB ou en même temps que ces derniers.

Selon un autre mode préféré du procédé de préparation du catalyseur préparé selon la présente invention, le dépôt de bore et de silicium peut aussi être réalisé de manière simultanée en utilisant par exemple une solution contenant un sel de bore et un composé du silicium de type silicone.

L'imprégnation du niobium peut être facilitée par ajout d'acide oxalique et éventuellement d'oxalate d'ammonium dans les solutions d'oxalate de niobium. D'autres composés peuvent être utilisés pour améliorer la solubilité et faciliter l'imprégnation du niobium comme il est bien connu de l'Homme du métier.

Dans le cas particulier de l'obtention finale du catalyseur préparé selon l'invention sous forme d'extrudés, il est intéressant de préparer des catalyseurs présentant des concentrations homogènes en éléments des groupes VIB et/ou en éléments du groupe VIII, et éventuellement en phosphore, en bore, en silicium et éventuellement en éléments des groupes VB, et VIIB le long de ces derniers. Il est également intéressant de préparer des catalyseurs présentant des concentrations en éléments des groupes VIB et/ou en éléments du groupe VIII, et éventuellement en phosphore, en bore, en silicium et éventuellement en éléments des groupes VB, et VIIB au coeur et en périphérie, différentes. Ces catalyseurs présentent des profils de répartition dits en "cuvette" ou en "dôme". Un autre type de répartition est celle en croûte où les éléments de la phase active sont répartis en surface.

De façon générale, le rapport coeur/bord des concentrations en éléments des groupes VIB et/ou en éléments du groupe VIII, et éventuellement en phosphore, en bore, en silicium et éventuellement en éléments des groupes VB, et VIIB est compris entre 0,1 et 3. Dans une variante de l'invention, il est compris entre 0,8 et 1,2. Dans une autre variante de l'invention, il est compris entre 0,3 et 0,8.

Les métaux du groupe VIB et du groupe VIII du catalyseur préparé selon la présente invention peuvent être présents en totalité ou partiellement sous forme métallique et/ou oxyde et/ou sulfure.

Parmi les sources de molybdène et de tungstène, on peut utiliser les oxydes et hydroxydes, les acides molybdiques et tungstiques et leurs sels en particulier les sels d'ammonium tels que le molybdate d'ammonium, l'heptamolybdate d'ammonium, le tungstate d'ammonium, le métatungstate d'ammonium, l'acide phosphomolybdique ($H_3PMo_{12}O_{40}$), l'acide phosphotungstique ($H_3PW_{12}O_{40}$) et leurs sels, l'acide silicomolybdique ($H_4SiMo_{12}O_{40}$), l'acide silicotungstique ($H_4SiW_{12}O_{40}$) et leurs sels. Les sources de molybdène et de tungstène peuvent être tout hétéropolycomposé de type Keggin, Keggin lacunaire, Dawson, Anderson, Strandberg, par exemple... On utilise de préférence les oxydes et les sels d'ammonium tels que l'heptamolybdate d'ammonium et le métatungstate d'ammonium.

Les sources d'éléments du groupe VIII qui peuvent être utilisées, sont bien connues de l'Homme du métier. Par exemple, pour les métaux non nobles on utilisera les nitrates tels que le nitrate de cobalt, le nitrate de nickel, les sulfates, les hydroxydes tels que les hydroxydes de cobalt, les hydroxydes de nickel, les phosphates, les halogénures (par exemple, chlorures, bromures et fluorures), les carboxylates (par exemple acétates et carbonates). Pour les métaux nobles on utilisera les halogénures, par exemple les chlorures, les nitrates tels que le nitrate de palladium, les acides tels que l'acide chloroplatinique, les oxychlorures tels que l'oxychlorure ammoniacal de ruthénium.

La source de phosphore préférée, le phosphore étant utilisé en tant qu'élément dopant, est l'acide orthophosphorique $H_3PO_4$, mais ses sels et esters comme les phosphates d'ammonium conviennent également. Le phosphore peut par exemple être introduit sous la forme d'un mélange d'acide phosphorique et un composé organique basique contenant de l'azote tel que l'ammoniaque, les amines primaires et secondaires, les amines cycliques, les composés de la famille de la pyridine et des quinoléines et les composés de la famille du pyrrole. Les acides phosphotungstites ou phosphomolybdiques peuvent être employés.

La teneur en phosphore, le phosphore étant utilisé en tant qu'élément dopant, est ajustée, sans que cela limite la portée de l'invention, de telle manière à former un composé mixte en solution et/ou sur le support par exemple tungstène-phosphore ou molybdène-tungstène-phosphore. Ces composés mixtes peuvent être des hétéropolyanions. Ces composés peuvent être des hétéropolynanions de Keggin, par exemple.

La source de bore, le bore étant utilisé en tant qu'élément dopant, peut être l'acide borique, de préférence l'acide orthoborique $H_3BO_3$, le biborate ou le pentaborate d'ammonium, l'oxyde de bore, les esters boriques. Le bore peut par exemple être introduit sous la forme d'un mélange d'acide borique, d'eau oxygénée et un composé organique basique contenant de l'azote tel que l'ammoniaque, les amines primaires et secondaires, les amines cycliques, les composés de la famille de la pyridine et des quinoléines et les composés de la famille du pyrrole. Le bore peut être introduit par exemple par une solution d'acide borique dans un mélange eau/alcool.

De nombreuses sources de silicium, le silicium étant utilisé en tant qu'agent dopant, peuvent être employées. Ainsi, on peut utiliser le tétraéthylorthosilicate $Si(OEt)_4$, les siloxanes, les polysiloxanes, les silicones, les émulsions de silicones, les silicates d'halogénures comme le fluorosilicate d'ammonium $(NH_4)_2SiF_6$ ou le fluorosilicate de sodium $Na_2SiF_6$. L'acide silicomolybdique et ses sels, l'acide silicotungstique et ses sels peuvent également être avantageusement employés. Le silicium peut être ajouté par exemple par imprégnation de silicate d'éthyle en solution dans un mélange eau/alcool. Le silicium peut être ajouté par exemple par imprégnation d'un composé du silicium de type silicone ou l'acide silicique mis en suspension dans l'eau.

Les sources d'élément du groupe VB qui peuvent être utilisées, sont bien connues de l'Homme du métier. Par exemple, parmi les sources de niobium, on peut utiliser les oxydes, tels que le pentaoxyde de diniobium $Nb_2O_5$, l'acide niobique $Nb_2O_5$, $H_2O$, les hydroxydes de niobium et les polyoxoniobates, les alkoxydes de niobium de formule $Nb(OR_1)_5$ où $R_1$ est un radical alkyle, l'oxalate de niobium $Nb(HC_2O_4)_5$, le niobate d'ammonium. On utilise de préférence l'oxalate de niobium ou le niobate d'ammonium.

Les sources d'éléments du groupe VIIA qui peuvent être utilisées, sont bien connues de l'Homme du métier. Par exemple, les anions fluorures peuvent être introduits sous forme d'acide fluorhydrique ou de ses sels. Ces sels sont formés avec des métaux alcalins, l'ammonium ou un composé organique. Dans ce dernier cas, le sel est avantageusement formé dans le mélange réactionnel par réaction entre le composé organique et l'acide fluorhydrique. Il est également possible d'utiliser des composés hydrolysables pouvant libérer des anions fluorures dans l'eau, comme le fluorosilicate d'ammonium $(NH_4)_2SiF_6$, le tétrafluorure de silicium $SiF_4$ ou de sodium $Na_2SiF_6$. Le fluor peut être introduit par exemple par imprégnation d'une solution aqueuse d'acide fluorhydrique ou de fluorure d'ammonium.

L'imprégnation du matériau à porosité hiérarchisée et organisée avec la phase active et les éventuels métaux du groupe VB, VIIB et ceux choisis parmi Si, B, P, est suivie d'un séchage à pression réduite ou pas à une température comprise entre 50 et 300°C et d'une calcination à une température comprise entre 300 et 1000°C et plus précisément entre 450 et 550°C pendant une durée de 1 à 24 heures et de façon préférée pendant une durée de 2 à 6 heures.

Les catalyseurs préparés selon l'invention peuvent être fabriqués et employés sous la forme de poudre, de poudre compactée concassée tamisée, de pastilles, de granulés, de tablettes, d'anneaux, de billes, de roues, de sphères ou d'extrudés, de préférence sous la forme de poudre compactée concassée tamisée, de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

<u>Procédés de traitement de charges hydrocarbonées selon l'invention.</u>

L'invention porte également sur les procédés pour le traitement des coupes hydrocarbonées utilisant le catalyseur préparé selon l'invention.

Plus particulièrement, l'invention porte sur un procédé d'hydrocraquage et/ou d'hydroconversion ainsi que sur un procédé pour l'hydrotraitement de charges hydrocarbonées utilisant le catalyseur préparé selon l'invention.

Le procédé d'hydrocraquage et/ou d'hydroconversion et le procédé d'hydrotraitement selon l'invention opèrent en présence d'hydrogène, à une température supérieure à 200°C, sous une pression supérieure à 1 MPa, la vitesse spatiale étant comprise entre 0,1 et 20 $h^{-1}$ et la quantité d'hydrogène introduite est telle que le rapport volumique litre d'hydrogène/litre d'hydrocarbure soit compris entre 80 et 5000 l/l.

Les catalyseurs préparés selon l'invention sont utilisés avantageusement pour l'hydrocraquage et/ou l'hydroconversion de coupes hydrocarbonées.

Les catalyseurs préparés selon l'invention peuvent être utilisés pour l'hydrotraitement de charges hydrocarbonées, ledit procédé d'hydrotraitement peut être placé seul ou en amont d'un procédé d'hydrocraquage et/ou d'hydroconversion sur un catalyseur d'hydrocraquage à base de zéolithe ou d'alumine-silice, comprenant de préférence du nickel et du tungstène.

Sulfuration des catalyseurs

Préalablement à l'injection de la charge, les catalyseurs préparés selon la revendication 1 et utilisés dans le procédé selon la présente invention sont de préférence soumis préalablement à un traitement de sulfuration permettant de transformer, au moins en partie, les espèces métalliques en sulfure avant leur mise en contact avec la charge à traiter. Ce traitement d'activation par sulfuration est bien connu de l'Homme du métier et peut être effectué par toute méthode déjà décrite dans la littérature soit in-situ, c'est-à-dire dans le réacteur, soit ex-situ.

Une méthode de sulfuration classique bien connue de l'Homme du métier consiste à chauffer le catalyseur en présence d'hydrogène sulfuré (pur ou par exemple sous flux d'un mélange hydrogène/hydrogène sulfuré) à une température comprise entre 150 et 800°C, de préférence entre 250 et 600°C, généralement dans une zone réactionnelle à lit traversé.

Réduction des catalyseurs à base de métaux nobles

Préalablement à l'injection de la charge, le catalyseur d'hydrocraquage à base de métaux nobles peut être préalablement soumis à un traitement de réduction permettant de transformer, au moins en partie, les oxydes de métaux nobles en métaux nobles réduits. Une des méthodes préférées pour réaliser la réduction du catalyseur est un traitement sous hydrogène à une température comprise entre 150 et 650°C et à une pression totale comprise entre 0,1 et 20 MPa. Notons également que toute méthode de réduction ex-situ peut convenir. A titre d'exemple, une réduction peut comprendre un maintien à une température de 150°C pendant 2 heures, suivi par une montée en température jusqu'à 350°C à raison de 1°C par minute, puis un maintien à 350°C pendant 2 heures. Pendant ce traitement de réduction, le débit d'hydrogène peut être de 1000 litres d'hydrogène par litre de catalyseur.

Charges

Des charges très variées peuvent être traitées par les procédés selon l'invention décrits ci-dessus. Généralement elles contiennent au moins 20% volume et souvent au moins 80% volume de composés bouillant au-dessus de 340°C.

La charge peut être par exemple des LCO (Light Cycle Oil (gazoles légers issus d'une unité de craquage catalytique)), des distillats atmosphériques, des distillats sous vide par exemple gasoils issus de la distillation directe du brut ou d'unités de conversion telles que le FCC, le coker ou la viscoréduction, ainsi que des charges provenant d'unités d'extraction d'aromatiques des bases d'huile lubrifiante ou issues du déparaffinage au solvant des bases d'huile lubrifiante, ou encore des distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, ou encore la charge peut être une huile désasphaltée, ou encore tout mélange des charges précédemment citées. La liste ci-dessus n'est pas limitative. Les paraffines issues du procédé Fischer-Tropsch sont exclues. En général, les charges ont un point d'ébullition T5 supérieur à 340°C, et mieux encore supérieur à 370°C, c'est à dire que 95% des composés présents dans la charge ont un point d'ébullition supérieur à 340°C, et mieux encore supérieur à 370°C.

La teneur en azote des charges traitées dans les procédés selon l'invention est usuellement supérieure à 500 ppm poids, de préférence comprise entre 500 et 10000 ppm poids, de manière plus préférée entre 700 et 4000 ppm poids et de manière encore plus préférée entre 1000 et 4000 ppm poids. La teneur en soufre des charges traitées dans les procédés selon l'invention est usuellement comprise entre 0,01 et 5% poids, de manière préférée comprise entre 0,2 et 4% poids et de manière encore plus préférée entre 0,5 et 3 % poids.

La charge peut éventuellement contenir des métaux. La teneur cumulée en nickel et vanadium des charges traitées dans les procédés selon l'invention est de préférence inférieure à 1 ppm poids.

La teneur en asphaltènes est généralement inférieure à 3000 ppm poids, de manière préférée inférieure à 1000 ppm poids, de manière encore plus préférée inférieure à 200 ppm poids.

Lits de garde

Dans le cas où la charge contient des composés de type résines et/ou asphaltènes, il est avantageux de faire passer au préalable la charge sur un lit de catalyseur ou d'adsorbant différent du catalyseur d'hydrocraquage et/ou d'hydroconversion ou d'hydrotraitement. Les catalyseurs ou lits de garde utilisés selon l'invention ont la forme de sphères ou d'extrudés. Il est toutefois avantageux que le catalyseur se présente sous forme d'extrudés d'un diamètre compris entre 0,5 et 5 mm et plus particulièrement entre 0,7 et 2,5 mm. Les formes sont cylindriques (qui peuvent être creuses ou non), cylindriques torsadés, multilobées (2, 3, 4 ou 5 lobes par exemple), anneaux. La forme cylindrique est utilisée de manière préférée, mais toute autre forme peut être utilisée.

Afin de remédier à la présence de contaminants et ou de poisons dans la charge, les catalyseurs de garde peuvent, dans un autre de mode de réalisation préféré, avoir des formes géométriques plus particulières afin d'augmenter leur fraction de vide. La fraction de vide de ces catalyseurs est comprise entre 0,2 et 0,75. Leur diamètre extérieur peut varier entre 1 et 35 mm. Parmi les formes particulières possibles sans que cette liste soit limitative, nous citons : les cylindres creux, les anneaux creux, les anneaux de Raschig, les cylindres creux dentelés, les cylindres creux crénelés, les roues de charrettes pentaring, les cylindres à multiples trous, etc..

Ces catalyseurs ou lits de garde peuvent avoir été imprégnés par une phase active ou non. De manière préférée, les catalyseurs sont imprégnés par une phase hydrodéshydrogénante. De manière très préférée, la phase CoMo ou NiMo est utilisée.

Ces catalyseurs ou lits de garde peuvent présenter de la macroporosité. Les lits de garde peuvent être commercialisés par Norton-Saint-Gobain, par exemple les lits de garde MacroTrap®. Les lits de garde peuvent être commercialisés par Axens dans la famille ACT : ACT077, ACT935, ACT961 ou HMC841, HMC845, HMC941 ou HMC945. Il peut être particulièrement avantageux de superposer ces catalyseurs dans au moins deux lits différents de hauteurs variables. Les catalyseurs ayant le plus fort taux de vide sont de préférence utilisés dans le ou les premiers lits catalytiques en entrée de réacteur catalytique. Il peut également être avantageux d'utiliser au moins deux réacteurs différents pour ces catalyseurs.

Les lits de garde préférés selon l'invention sont les HMC et l'ACT961.

Conditions opératoires

Les conditions opératoires telles que température, pression, taux de recyclage d'hydrogène, vitesse spatiale horaire, pourront être très variables en fonction de la nature de la charge, de la qualité des produits désirés et des installations dont dispose le raffineur. Le catalyseur d'hydrocraquage/hydroconversion ou d'hydrotraitement est généralement mis en contact, en présence d'hydrogène, avec les charges décrites précédemment, à une température supérieure à 200°C, souvent comprise entre 250 et 480°C, avantageusement comprise entre 320 et 450°C, de préférence entre 330 et 435°C, sous une pression supérieure à 1 MPa, souvent comprise entre 2 et 25 MPa, de manière préférée entre 3 et 20 MPa, la vitesse spatiale étant comprise entre 0,1 et 20 $h^{-1}$ et de préférence 0,1-6 $h^{-1}$, de préférence, 0,2-3 $h^{-1}$, et la quantité d'hydrogène introduite est telle que le rapport volumique litre d'hydrogène/litre d'hydrocarbure soit compris entre 80 et 5000 l/l et le plus souvent entre 100 et 2000 l/l.

Ces conditions opératoires utilisées dans les procédés selon l'invention permettent généralement d'atteindre des conversions par passe, en produits ayant des points d'ébullition inférieurs à 340°C, et mieux inférieurs à 370°C, supérieures à 15% et de manière encore plus préférée comprises entre 20 et 95%.

Modes de réalisation

Les procédés d'hydrocraquage et/ou hydroconversion mettant en oeuvre les catalyseurs préparés selon l'invention couvrent les domaines de pression et de conversion allant de l'hydrocraquage doux à l'hydrocraquage haute pression. On entend par hydrocraquage doux, un hydrocraquage conduisant à des conversions modérées, généralement inférieures à 40%, et fonctionnant à basse pression, généralement entre 2 MPa et 6 MPa.

Le catalyseur préparé selon la présente invention peut être utilisé seul, en un seul ou plusieurs lits catalytiques en lit fixe, dans un ou plusieurs réacteurs, dans un schéma d'hydrocraquage dit en une étape, avec ou sans recyclage liquide de la fraction non convertie, éventuellement en association avec un catalyseur d'hydroraffinage situé en amont du catalyseur préparé selon la présente invention.

Le catalyseur préparé selon la présente invention peut être utilisé seul, dans un seul ou plusieurs réacteurs en lit bouillonnant, dans un schéma d'hydrocraquage dit en une étape, avec ou sans recyclage liquide de la fraction non convertie, éventuellement en association avec un catalyseur d'hydroraffinage situé dans un réacteur en lit fixe ou en lit bouillonnant en amont du catalyseur préparé selon la présente invention.

Le lit bouillonnant s'opère avec retrait de catalyseur usé et ajout journalier de catalyseur neuf afin de conserver une activité du catalyseur stable.

Procédé dit en une étape

L'hydrocraquage dit en une étape, comporte en premier lieu et de façon générale un hydroraffinage poussé qui a pour but de réaliser une hydrodéazotation et une désulfuration poussées de la charge avant que celle-ci ne soit envoyée sur le catalyseur d'hydrocraquage proprement dit, en particulier dans le cas où celui-ci comporte une zéolithe. Cet hydroraffinage poussé de la charge n'entraîne qu'une conversion limitée de la charge, en fractions plus légères, qui reste insuffisante et doit donc être complétée sur le catalyseur d'hydrocraquage plus actif. Cependant, il est à noter qu'aucune séparation n'intervient entre les deux types de catalyseurs. La totalité de l'effluent en sortie de réacteur est injectée sur le catalyseur d'hydrocraquage proprement dit et ce n'est qu'ensuite qu'une séparation des produits formés est réalisée. Cette version de l'hydrocraquage, encore appelée "Once Through"; possède une variante qui présente un recyclage de la fraction non convertie vers le réacteur en vue d'une conversion plus poussée de la charge.

<u>Procédé dit en une étape en lit fixe</u>

Pour les catalyseurs à faible teneur en silice, les teneurs pondérales en silice du support entrant dans la composition du catalyseur sont comprises entre 5 et 30% et de préférence entre 5 et 20%.

Pour les catalyseurs à forte teneur en silice, les teneurs pondérales en silice du support entrant dans la composition du catalyseur sont comprises entre 20 et 80% et de préférence entre 30 et 60%.

Dans le cas où le catalyseur préparé selon la présente invention est utilisé en amont d'un catalyseur zéolithique d'hydrocraquage, par exemple à base de zéolithe Y, on utilisera avantageusement un catalyseur présentant une faible teneur pondérale en silice telle que définie précédemment. Il pourra aussi être avantageusement utilisé en association avec un catalyseur d'hydroraffinage, ce dernier étant situé en amont du catalyseur préparé selon la présente invention.

Lorsque le catalyseur préparé selon la présente invention est utilisé en amont d'un catalyseur d'hydrocraquage à base d'alumine-silice ou à base de zéolithe, dans le même réacteur dans des lits catalytiques distincts ou dans des réacteurs distincts, la conversion est généralement (ou de préférence) inférieure à 50% poids et de manière préférée inférieure à 40%.

Le catalyseur préparé selon l'invention peut être utilisé en amont ou en aval du catalyseur zéolithique. En aval du catalyseur zéolithique, il permet de craquer les HPA. Par HPA, on entend les hydrocarbures polyaromatiques tels que décrits notamment dans l'ouvrage *"Hydrocracking, Science and Technology"* de J.Scherzer, Editions M.Dekker Incorporated, 1996.

<u>Procédé dit en une étape en lit bouillonnant</u>

Le catalyseur préparé selon l'invention peut être utilisé seul dans un ou plusieurs réacteur(s). Dans le cadre d'un tel procédé, on pourra utiliser avantageusement plusieurs réacteur(s) en série, le ou les réacteur(s) en lit bouillonnant contenant le catalyseur selon l'invention étant précédé d'un ou plusieurs réacteur(s) contenant au moins un catalyseur d'hydroraffinage en lit fixe ou en lit bouillonnant.

Lorsque le catalyseur préparé selon la présente invention est utilisé en aval d'un catalyseur d'hydroraffinage, la conversion de la fraction de la charge occasionnée par ce catalyseur d'hydroraffinage est généralement (ou de préférence) inférieure à 30% poids et de manière préférée inférieure à 25%.

<u>Procédé dit en une étape en lit fixe avec séparation intermédiaire</u>

Le catalyseur préparé selon la présente invention peut aussi être utilisé dans un procédé d'hydrocraquage dit en une étape comportant une zone d'hydroraffinage, une zone permettant l'élimination partielle de l'ammoniaque, par exemple par un flash chaud, et une zone comportant un catalyseur d'hydrocraquage. Ce procédé d'hydrocraquage de charges hydrocarbonées en une étape pour la production de distillats moyens et éventuellement de bases huiles comporte au moins une première zone réactionnelle d'hydroraffinage, et au moins une deuxième zone réactionnelle, dans laquelle est opéré l'hydrocraquage d'au moins une partie de l'effluent de la première zone réactionnelle. Ce procédé comporte également une séparation incomplète de l'ammoniaque de l'effluent sortant de la première zone. Cette séparation est avantageusement effectuée au moyen d'un flash chaud intermédiaire. L'hydrocraquage opéré en deuxième zone réactionnelle est réalisé en présence d'ammoniaque en quantité inférieure à la quantité présente dans la charge, de préférence inférieure à 1500 ppm poids, de manière plus préférée inférieure à 1000 ppm poids et de manière encore plus préférée inférieure à 800 ppm poids d'azote. Le catalyseur préparé selon la présente invention est utilisé de préférence dans la zone réactionnelle d'hydrocraquage en association ou non avec un catalyseur d'hydroraffinage situé en amont du catalyseur préparé selon la présente invention.

Le catalyseur préparé selon l'invention peut également être utilisé dans la première zone réactionnelle en prétraitement convertissant, seul ou en association avec un catalyseur d'hydroraffinage classique, situé en amont du catalyseur selon l'invention, dans un ou plusieurs lit(s) catalytique(s), dans un ou plusieurs réacteur(s).

<u>Procédé d'hydrocraquage dit en une étape avec hydroraffinage préliminaire sur catalyseur d'acidité faible.</u>

Le catalyseur préparé selon l'invention peut être utilisé dans un procédé d'hydrocraquage comprenant ;

-   une première zone réactionnelle d'hydroraffinage dans laquelle la charge est mise en contact avec au moins un catalyseur d'hydroraffinage présentant dans le test standard d'activité, défini dans le brevet français n°2 840 621, un taux de conversion du cyclohexane inférieur à 10% massique,

**-** une deuxième zone réactionnelle d'hydrocraquage dans laquelle une partie au moins de l'effluent issu de l'étape d'hydroraffinage est mise en contact avec au moins un catalyseur d'hydrocraquage présentant dans le test standard d'activité un taux de conversion du cyclohexane supérieur à 10% massique, le catalyseur préparé selon l'invention étant présent dans au moins une des deux zones réactionnelles.

La proportion du volume catalytique de catalyseur d'hydroraffinage représente généralement 20 à 45% du volume catalytique total.

L'effluent issu de la première zone réactionnelle est au moins en partie, de préférence en totalité, introduit dans la deuxième zone réactionnelle dudit procédé. Une séparation intermédiaire des gaz peut être réalisée comme décrite précédemment

L'effluent en sortie de deuxième zone réactionnelle est soumis à une séparation dite finale (par exemple par distillation atmosphérique éventuellement suivie d'une distillation sous vide), de manière à séparer les gaz. Il est obtenu au moins une fraction liquide résiduelle, contenant essentiellement des produits dont le point d'ébullition est généralement supérieur à 340°C, qui peut être au moins en partie recyclée en amont de la deuxième zone réactionnelle du procédé selon l'invention, et de préférence en amont du catalyseur d'hydrocraquage à base d'alumine-silice, dans un objectif de production de distillats moyens.

La conversion en produits ayant des points d'ébullition inférieurs à 340°C, ou encore inférieurs à 370°C est d'au moins 50% poids.

Procédé dit en deux étapes

Dans un schéma d'hydrocraquage dit en deux étapes avec séparation intermédiaire entre les deux zones réactionnelles, dans une étape donnée, le catalyseur préparé selon la présente invention peut-être utilisé dans l'un ou dans les deux réacteurs en association ou non avec un catalyseur d'hydroraffinage situé en amont du catalyseur préparé selon la présente invention.

L'hydrocraquage en deux étapes, comporte une première étape qui a pour objectif, comme dans le procédé "une étape", de réaliser l'hydroraffinage de la charge, mais aussi d'atteindre une conversion de cette dernière de l'ordre en général de 40 à 60%. L'effluent issu de la première étape subit ensuite une séparation (distillation) appelée le plus souvent séparation intermédiaire, qui a pour objectif de séparer les produits de conversion de la fraction non convertie. Dans la deuxième étape d'un procédé d'hydrocraquage en deux étapes, seule la fraction de la charge non convertie lors de la première étape, est traitée. Cette séparation permet à un procédé d'hydrocraquage deux étapes d'être plus sélectif en distillats moyens (kérosène + diesel) qu'un procédé en une étape. En effet, la séparation intermédiaire des produits de conversion évite leur "sur-craquage" en naphta et gaz dans la deuxième étape sur le catalyseur d'hydrocraquage. Par ailleurs, il est à noter que la fraction non convertie de la charge traitée dans la deuxième étape contient en général de très faibles teneurs en $NH_3$ ainsi qu'en composés azotés organiques, en général moins de 20 ppm poids voire moins de 10 ppm poids.

Les configurations de lits catalytiques en lit fixe ou en lit bouillonnant décrites dans le cas d'un procédé dit en une étape peuvent être utilisées dans la première étape d'un schéma dit en deux étapes, que le catalyseur préparé selon l'invention soit utilisé seul ou en association avec un catalyseur d'hydroraffinage classique.

Pour les procédés dits en une étape et pour la première étape des procédés d'hydrocraquage en deux étapes, les catalyseurs préférés préparés selon l'invention sont les catalyseurs dopés à base d'éléments du groupe VIII non nobles, de manière encore plus préférée les catalyseurs à base de nickel et de tungstène, l'élément dopant préféré étant le phosphore.

Les catalyseurs utilisés dans la deuxième étape des procédés d'hydrocraquage en deux étapes sont de préférence les catalyseurs dopés à base d'éléments nobles du groupe VIII, de manière encore plus préférée les catalyseurs à base de platine et/ou de palladium, l'élément dopant préféré étant le phosphore.

Hydrotraitement/hydroraffinage de charges hydrocarbonées selon l'invention

Les catalyseurs préparés selon l'invention sont utilisés pour l'hydrotraitement et l'hydroraffinage de charges hydrocarbonées telles que les coupes pétrolières, les coupes issues du charbon ou les hydrocarbures produits à partir du gaz naturel et plus particulièrement pour l'hydrogénation, l'hydrodésulfuration, l'hydrodéazotation, l'hydrodéoxygénation, l'hydrodésaromatisation et l'hydrodémétallation de charges hydrocarbonées contenant des composés aromatiques et/ou oléfiniques et/ou naphténiques et/ou paraffiniques, lesdites charges contenant éventuellement des métaux et/ou de l'azote et/ou de l'oxygène et/ou du soufre.

Plus particulièrement, les charges employées dans les procédés d'hydrotraitement sont des essences, des gas-oils, des gas-oils sous vide, des résidus atmosphériques, des résidus sous vide, des distillats atmosphériques, des distillats sous vide, des fuels lourds, des huiles, des cires et des paraffines, des huiles usagées, des résidus ou des bruts désasphaltés, des charges provenant des procédés de conversions thermiques ou catalytiques et leurs mélanges. Elles contiennent en général des hétéroatomes tels que le soufre, l'oxygène et l'azote et/ou au moins un métal.

Comme rappelé précédemment, les catalyseurs préparés selon l'invention peuvent être utilisés dans un grand nombre d'applications d'hydroraffinage ou d'hydrotraitement. Les conditions opératoires qui peuvent être appliquées dans ces procédés sont habituellement : une température de 200 à 450° C, de façon préférée entre 250 et 440°C, une pression de 1 à 25 MPa, de façon préférée entre 1 et 18 MPa, une vitesse volumique horaire de 0,1 à 20 h$^{-1}$, de façon préférée entre 0,2 et 5 h$^{-1}$, un rapport hydrogène/charge exprimé en volume d'hydrogène, mesuré dans les conditions normales de température et pression, par volume de charge liquide généralement de 80 l/l à 5000 l/l et le plus souvent de 100 l/l à 2000 l/l.

Les exemples suivants illustrent la présente invention sans toutefois en limiter la portée.

EXEMPLES

Dans les exemples qui suivent, la technique aérosol utilisée est celle décrite ci-dessus dans l'exposé de l'invention.

Pour chacun des exemples des supports S1 et S3 ci-dessous, on calcule le rapport $V_{inorganique}/V_{organique}$ du mélange issu de l'étape b). Ce rapport est défini comme suit : $V_{inorganique}/V_{organique} = (m_{inorg} * \rho_{org}) / (m_{org} * \rho_{inorg})$ où $m_{inorg}$ est la masse finale de la fraction inorganique sous forme d'oxyde(s) condensé(s), à savoir $SiO_2$ et $AlO_2$, dans la particule élémentaire solide obtenue par atomisation, $m_{org}$ est la masse totale de la faction organique non volatile se retrouvant dans la particule élémentaire solide obtenue par atomisation, à savoir le tensioactif et l'agent structurant, $\rho_{org}$ et $\rho_{inorg}$ sont les densités respectivement associées aux fractions organique non volatile et inorganique. Dans les exemples qui suivent, on considère que $\rho_{org} = 1$ et $\rho_{inorg} = 2$. Aussi le rapport $V_{inorganique}/V_{organique}$ est calculé comme étant égal à $V_{inorganique}/V_{organique} = (M_{SiO2} + M_{AlO2}) / [2*(m_{agent\ structurant} + m_{tensioactif})]$. L'éthanol, la soude, l'eau n'entrent pas en compte dans le calcul dudit rapport $V_{inorganique}/V_{organique}$.

Exemple 1 : préparation d'un catalyseur C1 (invention)

Mise en forme du support S1

Préparation d'un matériau S1 à porosité hiérarchisée dans les domaines de la microporosité et de la mésoporosité et organisée dans le domaine de la mésoporosité dont les parois amorphes microporeuses sont constituées d'entités proto-zéolithiques aluminosilicates de type ZSM-5 (MFI) telles que le rapport molaire Si/Al = 49.

6,86 g d'une solution d'hydroxyde de tétrapropylammonium (TPAOH 40% en masse dans une solution aqueuse) sont ajoutés à 0,37 g de sec-butoxyde d'aluminium ($Al(O^sC_4H_9)_3$). Après 30 min sous vive agitation à température ambiante, 27 g d'eau déminéralisée et 18,75 g de tétraéthylorthosilicate (TEOS) sont ajoutés. Le tout est laissé sous vive agitation à température ambiante pendant 18 heures de manière à obtenir une solution limpide. A cette solution est alors ajoutée une solution contenant 66,61 g d'éthanol, 61,24 g d'eau et 5,73 g de tensioactif F127 (pH du mélange = 13,5). Le rapport $V_{inorganique}/V_{organique}$ du mélange est égal à 0,32. Le tout est laissé sous agitation pendant 10 minutes. L'ensemble est envoyé

dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange $O_2/N_2$ dans des tubes en PVC. Elles sont ensuite introduites dans un four réglé à une température de séchage fixée à 350°C. La poudre récoltée est alors séchée 18 heures à l'étuve à 95°C. La poudre est alors calcinée sous air pendant 5 h à 550°C. Le solide est caractérisé par DRX aux bas angles, par volumétrie à l'azote, par MET, par MEB, par FX. L'analyse MET montre que le matériau final présente une mésoporosité organisée caractérisée par une structure vermiculaire. L'analyse par Volumétrie à l'azote combinée à l'analyse par la méthode $\alpha_s$ conduit à une valeur du volume microporeux $V_{micro}$ ($N_2$) de 0,13 ml/g, une valeur du volume mésoporeux $V_{méso}$ ($N_2$) de 0,61 ml/g et une surface spécifique du matériau final de S = 781 m$^2$/g. Le diamètre mésoporeux $\phi$ caractéristique de la matrice mésostructurée est de 7 nm. L'analyse DRX aux petits angles conduit à la visualisation d'un pic de corrélation à l'angle $2\theta = 0,78°$. La relation de Bragg $2 d * sin (\theta) = 1,5406$ permet de calculer la distance d de corrélation entre les mésopores organisés du matériau, soit d = 11,3 nm. L'épaisseur des parois du matériau mésostructuré définie par e = d - $\phi$ est donc de e = 4,3 nm. Le rapport molaire Si/Al obtenu par FX est de 59. Un cliché MEB des particules élémentaires sphériques ainsi obtenues indique que ces particules ont une taille caractérisée par un diamètre variant de 50 à 3000 nm, la distribution en taille de ces particules étant centrée autour de 300 nm. Le matériau ainsi synthétisé est utilisé sous la forme de poudre compactée concassée tamisée.

On obtient ainsi le support S1.

Préparation du catalyseur d'hydrocraquage conforme à l'invention C1

Le catalyseur C1 est obtenu par imprégnation à sec du support S1 sous forme de poudre compactée concassée tamisée par une solution aqueuse renfermant des sels de tungstène et de nickel. Le sel de tungstène est le métatungstate d'ammonium $(NH_4)_6H_2W_{12}O_{40}*4H_2O$ et celui de nickel est le nitrate de nickel $Ni(NO_3)_2*6N_2O$. Après maturation à température ambiante dans une atmosphère saturée en eau, la poudre compactée concassée tamisée est séchée à 120°C pendant une nuit puis calcinée à 500°C sous air sec. Les teneurs massiques en $WO_3$, NiO du catalyseur C1 sont respectivement de 29,5% et 3,9%.

Les caractéristiques du catalyseur C1 sont les suivantes :

La surface BET est de 360 $m^2$/g.
Le diamètre mésoporeux moyen, mesuré par porosimétrie au mercure, est de 6,7 nm.

Exemple 2 préparation d'un catalyseur C2 (invention)

Mise en forme du support S2

Préparation d'un matériau S2 à porosité hiérarchisée dans les domaines de la microporosité et de la mésoporosité et organisée dans le domaine de la mésoporosité dont les parois amorphes microporeuses sont constituées d'entités proto-zéolithiques aluminosilicates de type ZSM-5 (MFI) telles que le rapport molaire Si/Al = 12.

6,86 g d'une solution d'hydroxyde de tétrapropylammonium (TPAOH 40% en masse dans une solution aqueuse) sont ajoutés à 1,71 g de sec-butoxyde d'aluminium $(Al(O^sC_4H_9)_3)$. Après 30 min sous vive agitation à température ambiante, 27 g d'eau déminéralisée et 17,66 g de tétraéthylorthosilicate (TEOS) sont ajoutés. Le tout est laissé sous vive agitation à température ambiante pendant 4 jours de manière à obtenir une solution limpide. A cette solution est alors ajoutée une solution contenant 66,61 g d'éthanol, 61,24 g d'eau et 5,73 g de tensioactif F127 (pH du mélange = 12). Le rapport $V_{inorganique}/V_{organique}$ du mélange est égal à 0,32 et est calculé comme décrit ci-dessus. Le tout est laissé sous agitation pendant 10 minutes. L'ensemble est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange $O_2/N_2$ dans des tubes en PVC. Elles sont ensuite introduites dans un four réglé à une température de séchage fixée à 350°C. La poudre récoltée est alors séchée 18 heures à l'étuve à 95°C. La poudre est alors calcinée sous air pendant 5 h à 550°C. Le solide est caractérisé par DRX aux bas angles, par volumétrie à l'azote, par MET, par MEB, par FX. L'analyse MET montre que le matériau final présente une mésoporosité organisée caractérisée par une structure vermiculaire. L'analyse par Volumétrie à l'azote combinée à l'analyse par la méthode $\alpha_s$ conduit à une valeur du volume microporeux $V_{micro}$ ($N_2$) de 0,03 ml/g, une valeur du volume mésoporeux $V_{méso}$ ($N_2$) de 0,45 ml/g et une surface spécifique du matériau final de S = 595 $m^2$/g. Le diamètre mésoporeux $\phi$ caractéristique de la matrice mésostructurée est de 5 nm. L'analyse DRX aux petits angles conduit à la visualisation d'un pic de corrélation à l'angle $2\theta$ = 0,98°. La relation de Bragg 2 d * sin $(\theta)$ = 1,5406 permet de calculer la distance d de corrélation entre les mésopores organisés du matériau, soit d = 9 nm. L'épaisseur des parois du matériau mésostructuré définie par e = d - $\phi$ est donc de e = 4 nm. Le rapport molaire Si/Al obtenu par FX est de 12. Un cliché MEB des particules élémentaires sphériques ainsi obtenues indique que ces particules ont une taille caractérisée par un diamètre variant de 50 à 3000 nm, la distribution en taille de ces particules étant centrée autour de 300 nm. Le matériau ainsi synthétisé est utilisé sous la forme de poudre compactée concassée tamisée.

On obtient ainsi le support S2.

Préparation du catalyseur d'hydrocraquage conforme à l'invention C2

Le catalyseur C2 est obtenu par imprégnation à sec du support S2 sous forme de poudre compactée concassée tamisée par une solution aqueuse renfermant des sels de tungstène et de nickel. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, la poudre compactée concassée tamisée est séchée à 120°C pendant une nuit puis calcinée à 500°C sous air sec. Les teneurs massiques en $WO_3$, NiO du catalyseur C2 sont respectivement de 29,8% et 3,7%.

Les caractéristiques du catalyseur C2 sont les suivantes :

La surface BET est de 284 $m^2$/g.
Le diamètre mésoporeux moyen, mesuré par porosimétrie au mercure, est de 4,8 nm.

**EP 2 285 486 B1**

Exemple 3 : préparation d'un catalyseur C3 (invention)

Le catalyseur C3 est obtenu par imprégnation à sec du support S2 sous forme de poudre compactée concassée tamisée par une solution aqueuse renfermant des sels de tungstène et de nickel et d'acide phosphorique $H_3PO_4$. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, la poudre compactée concassée tamisée est séchée à 120°C pendant une nuit puis calcinée à 500°C sous air sec. Les teneurs massiques en $WO_3$, NiO, $P_2O_5$ du catalyseur C3 sont respectivement de 29,9%, 3,8% et 2%.
Les caractéristiques du catalyseur C3 sont les suivantes :

La surface BET est de 271 $m^2$/g.
Le diamètre mésoporeux moyen, mesuré par porosimétrie au mercure, est de 4,7 nm.

Exemple 4 : préparation d'un catalyseur C4 (invention)

Mise en forme du support S3

Préparation d'un matériau S3 à porosité hiérarchisée dans les domaines de la microporosité et de la mésoporosité et organisée dans le domaine de la mésoporosité dont les parois amorphes microporeuses sont constituées d'entités proto-zéolithiques aluminosilicates de type Béta (BEA) telles que le rapport molaire Si/Al = 49.
4,96 g d'une solution d'hydroxyde de tétraéthylammonium (TEAOH 40% en masse dans une solution aqueuse) sont ajoutés à 0,37 g de sec-butoxyde d'aluminium $(Al(O^sC_4H_9)_3)$. Après 30 min sous vive agitation à température ambiante, 27 g d'eau déminéralisée et 18,75 g de tétraéthylorthosilicate (TEOS) sont ajoutés. Le tout est laissé sous vive agitation à température ambiante pendant 18 heures de manière à obtenir une solution limpide. A cette solution est alors ajoutée une solution contenant 66,61 g d'éthanol, 61,24 g d'eau et 5,73 g de tensioactif F127 (pH du mélange = 13,5). Le rapport $V_{inorganique}/V_{organique}$ du mélange est égal à 0,35 et est calculé comme décrit ci-dessus. Le tout est laissé sous agitation pendant 10 minutes. L'ensemble est envoyé dans la chambre d'atomisation du générateur d'aérosol tel qu'il a été décrit dans la description ci-dessus et la solution est pulvérisée sous la forme de fines gouttelettes sous l'action du gaz vecteur (air sec) introduit sous pression (P = 1,5 bar). Les gouttelettes sont séchées selon le protocole décrit dans l'exposé de l'invention ci-dessus : elles sont acheminées via un mélange $O_2/N_2$ dans des tubes en PVC. Elles sont ensuite introduites dans un four réglé à une température de séchage fixée à 350°C. La poudre récoltée est alors séchée 18 heures à l'étuve à 95°C. La poudre est alors calcinée sous air pendant 5 h à 550°C. Le solide est caractérisé par DRX aux bas angles, par volumétrie à l'azote, par MET, par MEB, par FX. L'analyse MET montre que le matériau final présente une mésoporosité organisée caractérisée par une structure vermiculaire. L'analyse par Volumétrie à l'azote combinée à l'analyse par la méthode $\alpha_s$ conduit à une valeur du volume microporeux $V_{micro}$ ($N_2$) de 0,09 ml/g, une valeur du volume mésoporeux $V_{méso}$ ($N_2$) de 0,52 ml/g et une surface spécifique du matériau final de S = 634 $m^2$/g. Le diamètre mésoporeux $\phi$ caractéristique de la matrice mésostructurée est de 4 nm. L'analyse DRX aux petits angles conduit à la visualisation d'un pic de corrélation à l'angle $2\theta$ = 1,09°. La relation de Bragg $2 d * \sin (\theta)$ = 1,5406 permet de calculer la distance d de corrélation entre les mésopores organisés du matériau, soit d = 8,1 nm. L'épaisseur des parois du matériau mésostructuré définie par e = d - $\phi$ est donc de e = 4,1 nm. Le rapport molaire Si/Al obtenu par FX est de 59. Un cliché MEB des particules élémentaires sphériques ainsi obtenues indique que ces particules ont une taille caractérisée par un diamètre variant de 50 nm à 3000 nm, la distribution en taille de ces particules étant centrée autour de 300 nm. Le matériau ainsi synthétisé est utilisé sous la forme de poudre compactée concassée tamisée.
On obtient ainsi le support S3.

Préparation du catalyseur d'hydrocraquage conforme à l'invention C4

Le catalyseur C4 est obtenu par imprégnation à sec du support S3 sous forme de poudre compactée concassée tamisée par une solution aqueuse renfermant des sels de tungstène et de nickel. Le sel de tungstène est le métatungstate d'ammonium $(NH_4)_6H_2W_{12}O_{40}*4H_2O$ et celui de nickel est le nitrate de nickel $Ni(NO_3)_2*6H_2O$. Après maturation à température ambiante dans une atmosphère saturée en eau, la poudre compactée concassée tamisée est séchée à 120°C pendant une nuit puis calcinée à 500°C sous air sec. Les teneurs massiques en $WO_3$, NiO du catalyseur C3 sont respectivement de 29,7% et 3,7%.
Les caractéristiques du catalyseur C4 sont les suivantes :

La surface BET est de 295 $m^2$/g.
Le diamètre mésoporeux moyen, mesuré par porosimétrie au mercure, est de 3,8 nm.

**22**

Exemple 5 : évaluation des catalyseurs C1, C2, C3, C4 en hydrocraquage d'un distillat sous vide en une étape à haute pression positionnés dans le 2nd réacteur, le réacteur d'hydrocraquage

Les catalyseurs C1, C2, C3, C4 dont la préparation est décrite dans les exemple 1,2,3,4 sont utilisés pour réaliser l'hydrocraquage d'un distillat sous vide préalablement hydrotraité dont les principales caractéristiques sont fournies dans le tableau 1, préalablement additivé avec 1250ppm de N et 2,8% de S.

Tableau 1 : caractéristiques du distillat sous vide hydrotraité non additivé

| | |
|---|---|
| Densité à 15°C | 0,8670 |
| Soufre (% poids) | 0 |
| Azote (ppm poids) | 0 |
| Distillation simulée | |
| Point 5% | 211°C |
| Point 50% | 411°C |
| Point 95% | 513°C |

Les catalyseurs C1, C2, C3, C4 ont été mis en oeuvre selon le procédé de l'invention en utilisant une unité pilote comportant 1 réacteur à lit fixe traversé, les fluides circulent de bas en haut (up-flow).
Préalablement au test d'hydrocraquage, les catalyseurs sont sulfurés à 14 MPa, à 350°C au moyen d'un gasoil de distillation directe additionné de 2% poids de DMDS (diméthyl disulfure).
Après sulfuration, les tests catalytiques ont été effectués dans les conditions suivantes :

pression totale : 14 MPa,
débit d'hydrogène : 1000 litres d'hydrogène gazeux par litre de charge injectée,
vitesse spatiale (WH) est égale à 1 h$^{-1}$,
température : température requise pour atteindre 80% de conversion nette.

Afin de simuler la pression partielle de $NH_3$ et de $H_2S$ libérés dans le réacteur d'hydroraffinage, la charge est constituée du DSV hydrotraité additivé de 1250 ppm de N et 2,8% de S.
Les performances catalytiques sont exprimées par la température requise pour atteindre 80% conversion nette en produits ayant un point d'ébullition inférieurs à 370°C, par la sélectivité brute en distillat moyen (coupe 150-370°C). La conversion et la sélectivité sont exprimées à partir des résultats de distillation simulée.
La conversion nette en produits ayant un point d'ébullition inférieurs à 370°C, notée CN 370°C, est prise égale à :

$$CN\ 370°C = [\ (\%\ de\ 370°C^-_{effluents}) - (\%\ de\ 370°C^-_{charge})\ ]\ /\ [\ 100 - (\%\ de\ 370°C^-_{charge})]$$

avec
% de 370°C effluents = teneur massique en composés ayant des points d'ébullition inférieurs à 370°C dans les effluents, et
% de 370°C$^-$ charge = teneur massique en composés ayant des points d'ébullition inférieurs à 370°C dans la charge.
La sélectivité brute en distillat moyen coupe 150-370°C, notée SB DM, est prise égale à :

$$SB\ DM = [(fraction\ en\ 150 - 370_{effluents})]\ /\ [(\%\ de\ 370°C^-_{effluents})].$$

Les performances catalytiques obtenues sont données dans le tableau 2 ci-après.

Tableau 2 : résultats catalytiques en hydrocraquage une étape et haute pression

| Catalyseur | VVh (h$^{-1}$) | Température nécessaire pour obtenir 80% de CN 370°C en % poids | SB DM en % poids |
|---|---|---|---|
| C1 | 1 | 392°C | 76,5 |

(suite)

| Catalyseur | VVh (h⁻¹) | Température nécessaire pour obtenir 80% de CN 370°C en % poids | SB DM en % poids |
|---|---|---|---|
| C2 | 1 | 382°C | 72,2 |
| C3 | 1 | 383°C | 71,9 |
| C4 | 1 | 395°C | 77,8 |

Les exemples précédents montrent donc tout l'intérêt d'utiliser un catalyseur préparé selon l'invention pour réaliser l'hydrocraquage de charges hydrocarbonées. En effet, les catalyseurs préparé selon l'invention permettent d'obtenir des conversions élevées de la charge et des sélectivités en distillats moyens très intéressantes, grâce à une plus grande proximité des sites acides et des sites hydrogénants, ce qui évite le surcraquage des réactifs.

Exemple 6 : évaluation des catalyseurs C1, C2, C3, C4 en hydrocraquage d'un distillat sous vide en une étape à haute pression. Les catalyseurs de l'invention sont placés dans le réacteur d'hydrocraquage en enchaînement avec un catalyseur d'hydrotraitement

Les catalyseurs C1, C2, C3, C4 dont les préparations sont décrites dans les exemples 1, 2, 3, 4 sont utilisés dans les conditions de l'hydrocraquage de distillats sous vide à pression élevée (14 MPa). Les catalyseurs C1, C2, C3, C4 sont utilisés en association avec un catalyseur d'hydroraffinage, ce dernier étant situé en amont du catalyseur préparé selon l'invention. Les catalyseurs selon l'invention amorcent la conversion en fin de lit dans le réacteur d'hydrotraitement.
Les principales caractéristiques de la charge pétrolière sont fournies dans le tableau 3.

Tableau 3 : caractéristiques du distillats sous vide

| | |
|---|---|
| Densité à 15°C | 0,926 |
| Soufre (% poids) | 2,03 |
| Azote (ppm poids) | 1527 |
| Distillation simulée | |
| Point 5% | 375°C |
| Point 10% | 393°C |
| Point 50% | 458°C |
| Point 90% | 535°C |
| Point final | 587°C |

L'unité de test catalytique comprend deux réacteurs en lit fixe, à circulation ascendante de la charge ("up-flow"). Dans chacun des réacteurs, on introduit 40 ml de catalyseur. Dans le premier réacteur, celui dans lequel la charge passe en premier, on introduit le catalyseur de première étape d'hydrotraitement HRK558 vendu par la société Axens comprenant un élément du groupe VI et un élément du groupe VIII déposés sur alumine. Dans le second réacteur, celui dans lequel la charge passe en dernier, on introduit le catalyseur préparé selon l'invention (C1, C2, C3, C4). Les deux catalyseurs subissent une étape de sulfuration in-situ avant réaction. Les catalyseurs sont sulfurés à 14 MPa, à 350°C au moyen d'un gasoil de distillation directe additionné de 2% poids de DMDS.
Une fois la sulfuration réalisée, la charge décrite ci-dessus peut être transformée.
Les tests catalytiques ont été effectués dans les conditions suivantes :

pression totale : 14 MPa,
débit d'hydrogène : 1000 litres d'hydrogène gazeux par litre de charge injectée,
vitesse spatiale (VVH) est égale à 0,7 h⁻¹,
température : température requise pour atteindre 60% de conversion nette en sortie du second réacteur. La conversion nette en produits ayant un point d'ébullition inférieurs à 370°C, notée CN 370°C, est prise égale à :

$$CN\ 370°C = [\ (\%\ de\ 370°C\ ^-_{effluents\ R2}\ ) - (\%\ de\ 370°C\ ^-_{effluents\ R1}) ]\ /\ [\ 100 - (\%\ de\ 370°C\ ^-_{effluents\ R1})]$$

avec
% de 370°C $^-_{effluents\ Rx}$ = teneur massique en composés ayant des points d'ébullition inférieurs à 370°C dans les effluents du réacteur x correspondant,

La sélectivité brute en distillat moyen coupe 150-370°C, notée SB DM, est prise égale à :

$$SB\ DM = [(fraction\ en\ 150 - 370\ _{effluents\ R2})]\ /\ [(\ \%\ de\ 370°C\ ^-_{effluents\ R2})].$$

Les performances catalytiques sont exprimées par la température requise pour atteindre 60% conversion nette en produits ayant un point d'ébullition inférieurs à 370°C, par la sélectivité brute en distillat moyen (coupe 150-370°C). La conversion et la sélectivité sont exprimées à partir des résultats de distillation simulée.

Dans le tableau 4 suivant, nous avons reporté la température de réaction nécessaire pour obtenir 60% de conversion nette en et la sélectivité brute pour les catalyseurs préparé selon l'invention.

Tableau 4 : résultats catalytiques en hydrocraquage une étape et haute pression en association avec un catalyseur d'hydroraffinage

| Catalyseur | VVh (h$^{-1}$) | Température nécessaire pour obtenir 60% de CN 370°C en % poids | SB DM en % poids |
|---|---|---|---|
| C1 | 0,7 | 386°C | 81,0 |
| C2 | 0,7 | 377°C | 78,8 |
| C3 | 0,7 | 375°C | 78,4 |
| C4 | 0,7 | 388°C | 81,4 |

Les exemples précédents montrent donc tout l'intérêt d'utiliser un catalyseur préparé selon l'invention pour réaliser l'hydrocraquage de charges hydrocarbonées. En effet, les catalyseurs préparés selon l'invention permettent d'obtenir des conversions élevées de la charge et des sélectivités en distillats moyens très intéressantes, grâce à une plus grande proximité des sites acides et des sites hydrogénants, ce qui évite le surcraquage des réactifs.

Exemple 7 : évaluation des catalyseurs C1, C2, C3, C4 en hydrocraquage d'un distillat sous vide en une étape à pression modérée (hydrocraquage doux) dans un schéma où les catalyseurs sont en enchaînement

Les catalyseurs C1, C2, C3, C4 dont les préparations sont décrites dans les exemples 1, 2, 3, 4 sont utilisés dans les conditions de l'hydrocraquage doux de distillats sous vide à pression modérée (6 MPa). Les catalyseurs C1, C2, C3, C4 sont utilisés en enchaînement avec un catalyseur d'hydroraffinage, ce dernier étant situé en amont du catalyseur préparé selon l'invention. Les principales caractéristiques de la charge pétrolière sont fournies dans le tableau 5.

Tableau 5 : caractéristiques du distillat sous vide

| | |
|---|---|
| Densité à 15°C | 0,923 |
| Soufre (% poids) | 2,36 |
| Azote (ppm poids) | 857 |
| Distillation simulée | |
| Point 5% | 346°C |
| Point 50% | 450°C |
| Point 95% | 543°C |
| Point final | 568°C |

L'unité de test catalytique comprend deux réacteurs en lit fixe, à circulation ascendante de la charge ("up-flow"). Dans chacun des réacteurs, on introduit 40 ml de catalyseur. Dans le premier réacteur, celui dans lequel la charge passe en premier, on introduit le catalyseur de première étape d'hydrotraitement HRK558 vendu par la société Axens comprenant un élément du groupe VI et un élément du groupe VIII déposés sur alumine. Dans le second réacteur, celui dans lequel la charge passe en dernier, on introduit le catalyseur préparé selon l'invention (C1, C2, C3, C4). Les deux catalyseurs subissent une étape de sulfuration in-situ avant réaction. Les catalyseurs sont sulfurés à 6 MPa, à 350°C au moyen d'un gasoil de distillation directe additionné de 2% poids de DMDS. Une fois la sulfuration réalisée, la charge décrite ci-dessus peut être transformée.

Après sulfuration, les tests catalytiques ont été effectués dans les conditions suivantes :

pression totale : 6 MPa,
débit d'hydrogène : 450 litres d'hydrogène gazeux par litre de charge injectée,
vitesse spatiale (WH) est égale à 1h$^{-1}$,
température : température requise pour atteindre 50% de conversion nette en sortie du second réacteur. La conversion nette en produits ayant un point d'ébullition inférieurs à 370°C, notée CN 370°C, est prise égale à :

$$CN\ 370°C = [\ (\%\ de\ 370°C^-_{effluents\ R2}) - (\%\ de\ 370°C^-_{charge\ en\ entrée})\ ]\ /\ [\ 100 - (\%\ de\ 370°C^-_{charge\ en\ entrée})]$$

avec
% de 370°C$^-_{effluents\ R2}$ = teneur massique en composés ayant des points d'ébullition inférieurs à 370°C dans les effluents du 2$^{ème}$ réacteur,
et
% de 370°C$^-$ charge en entrée = teneur massique en composés ayant des points d'ébullition inférieurs à 370°C dans la charge en entrée du 1$^{er}$ réacteur.

Les performances catalytiques sont exprimées par la température requise pour atteindre 50% conversion nette en produits ayant un point d'ébullition inférieurs à 370°C et par la sélectivité brute en distillats moyens (coupe 150-370°C). La conversion et la sélectivité sont exprimées à partir des résultats de distillation simulée.

Les performances catalytiques obtenues sont données dans le tableau 6 ci-après.

Tableau 6 : résultats catalytiques en hydrocraquage doux à pression modérée

| Catalyseur | VVH (h$^{-1}$) | Température nécessaire pour obtenir 50% de CN 370°C en % poids | SB DM en % poids Distillat moyen (DM) |
|---|---|---|---|
| C1 | 1 | 398°C | 80,0 |
| C2 | 1 | 386°C | 78,4 |
| C3 | 1 | 387°C | 78,9 |
| C4 | 1 | 399°C | 80,3 |

L'exemple précédent montre donc tout l'intérêt d'utiliser un catalyseur préparé selon l'invention pour réaliser l'hydrocraquage de charges hydrocarbonées. En effet, le catalyseur préparé selon l'invention permet d'obtenir des conversions très élevées de la charge et des sélectivités en distillats moyens très intéressantes, grâce à une plus grande proximité des sites acides et des sites hydrogénants, ce qui évite le surcraquage des réactifs.

**Revendications**

1. Procédé de préparation d'un catalyseur comprenant :

- la préparation d'au moins un support formé d'au moins un matériau amorphe comprenant du silicium à porosité hiérarchisée et organisée, constitué d'au moins deux particules sphériques élémentaires sous la forme d'agrégats, chacune desdites particules comprenant une matrice à base d'oxyde de silicium, mésostructurée, ayant un diamètre de mésopores compris entre 1,5 et 30 nm et présentant des parois amorphes et microporeuses entièrement constituées d'entités proto-zéolithiques d'épaisseur comprise entre 1,5 et 50 nm, lesdites particules sphériques élémentaires ayant un diamètre maximal de 200 microns,
comprenant :

a) la préparation d'un mélange réactionnel contenant les éléments précurseurs d'entités proto-zéolithiques, à savoir au moins un agent structurant choisi parmi les cations organiques azotés, les éléments de la famille des alcalins, des éthercouronnes et les diamines, au moins un précurseur silicique choisi parmi la silice solide en poudre, l'acide silicique, la silice colloïdale, la silice dissoute et le tétraéthoxysilane (TEOS) et au moins un précurseur d'au moins un élément X, X étant choisi parmi l'aluminium, le fer, le germanium, le bore et le titane, ledit mélange réactionnel étant soit aqueux, soit aquo-organique, l'agent structurant étant basique ou le mélange réactionnel étant basifié par l'ajout d'un composé basique choisi parmi les hydroxydes de métaux alcalins, et ledit mélange réactionnel étant mis sous conditions hydrothermales sous pression autogène, à une température comprise entre la température ambiante et 200 °C jusqu'à la formation d'une solution limpide ;
b) le mélange en solution d'au moins un tensioactif et d'au moins ladite solution limpide obtenue selon a) tel que le rapport des volumes des matières inorganique et organique soit compris entre 0,26 et 4, le pH de la solution obtenue à l'étape b) étant supérieur à 9 ;
c) l'atomisation par aérosol de ladite solution obtenue à l'étape b) pour conduire à la formation de gouttelettes sphériques ; d) le séchage desdites gouttelettes et e) l'élimination dudit agent structurant et dudit tensioactif, dans lequel dans lequel lesdites entités proto-zéolithiques sont des espèces pour l'amorce d'au moins une zéolithe choisie parmi les aluminosilicates ZSM-5, ZSM-48, ZSM-22, ZSM-23, ZBM-30, EU-1, EU-2, EU-11, Bêta, zéolithe A, Y, USY, VUSY, SDUSY, mordénite, NU-87, NU-88, NU-86, NU-85, IM-5, IM-12, IZM-2 et Ferriérite et/ou au moins un solide apparenté choisi parmi les silicoaluminophosphates SAPO-11 et SAPO-34, la préparation desdites espèces protozéolithiques n'étant pas menée jusqu'au stade de la formation de zéolithes cristallisées et de solides apparentés correspondants,

- le mélange dudit matériau à porosité hiérarchisée et organisée avec au moins une phase active contenant au moins un élément hydro-déshydrogénant du groupe VIB et /ou du groupe VIII de la classification périodique.

**2.** Procédé selon la revendication 1 dans lequel ledit élément hydro-déshydrogénant de ladite phase active choisi dans le groupe formé par les éléments du groupe VIB de la classification périodique est le molybdène.

**3.** Procédé selon la revendication 1 dans lequel ledit élément hydro-déshydrogénant de ladite phase active choisi dans le groupe formé par les éléments du groupe VIB de la classification périodique est le tungstène.

**4.** Procédé selon la revendication 1 dans lequel ledit élément hydro-déshydrogénant choisi dans le groupe formé par les éléments du groupe VIII de la classification périodique, est choisi parmi le cobalt, le nickel et le platine.

**5.** Procédé selon la revendication 1 dans lequel ledit élément du groupe VIII est le nickel et ledit élément du groupe VIB est le tungstène.

**6.** Procédé selon l'une des revendications 1 à 5 dans lequel aucune des particules sphériques constituant ledit matériau ne présente de macropores.

**7.** Procédé d'hydrocraquage et/ou d'hydroconversion de charges hydrocarbonées utilisant le catalyseur préparé selon l'une des revendications 1 à 6 tel qu'il opère en présence d'hydrogène, à une température supérieure à 200°C, sous une pression supérieure à 1 MPa, la vitesse spatiale étant comprise entre 0,1 et 20 h$^{-1}$ et la quantité d'hydrogène introduite est telle que le rapport volumique litre d'hydrogène / litre d'hydrocarbure soit compris entre 80 et 5000 l/l.

**8.** Procédé d'hydrocraquage et/ou d'hydroconversion selon la revendication 7 tel qu'il est réalisé selon le procédé dit en une étape.

**9.** Procédé d'hydrocraquage et/ou d'hydroconversion selon la revendication 7 tel qu'il est réalisé selon le procédé dit en deux étapes.

**10.** Procédé d'hydrotraitement de charges hydrocarbonées utilisant le catalyseur préparé selon l'une des revendications 1 à 6 tel qu'il opère en présence d'hydrogène, à une température supérieure à 200°C, sous une pression supérieure à 1 MPa, la vitesse spatiale étant comprise entre 0,1 et 20 h$^{-1}$ et la quantité d'hydrogène introduite est telle que le rapport volumique litre d'hydrogène / litre d'hydrocarbure soit compris entre 80 et 5000 l/l.

**11.** Procédé selon la revendication 10 tel qu'il est placé en amont d'un procédé d'hydrocraquage et/ou hydroconversion.

**12.** Procédé selon l'une des revendications 7 à 11 dans lequel les charges hydrocarbonées sont choisies dans le groupe formé par les LCO (light cycle oil : gazoles légers issus d'une unité de craquage catalytique), les distillats atmosphériques, les distillats sous vide, les charges provenant d'unités d'extraction d'aromatiques des bases d'huile lubrifiante ou issues du déparaffinage au solvant des bases d'huile lubrifiante, les distillats provenant de procédés de désulfuration ou d'hydroconversion en lit fixe ou en lit bouillonnant de RAT (résidus atmosphériques) et/ou de RSV (résidus sous vide) et/ou d'huiles désasphaltées, les huiles désasphaltées, seules ou en mélange.

**Patentansprüche**

**1.** Verfahren zur Herstellung eines Katalysators, umfassend

- das Herstellen mindestens eines Trägers, der aus mindestens einem amorphen Material gebildet ist, welches Silicium mit einer abgestuften und organisierten Porenbeschaffenheit umfasst und aus mindestens zwei kugelförmigen Elementarpartikeln in Form von Aggregaten besteht, wobei jeder der Partikel eine Matrix auf Basis von Siliciumoxid umfasst, die mesostrukturiert ist, wobei ihr Mesoporendurchmesser im Bereich von 1,5 bis 30 nm liegt und sie amorphe und mikroporöse Wände aufweist, welche vollständig aus proto-zeolithischen Einheiten mit einer Dicke im Bereich von 1,5 bis 50 nm bestehen, wobei die kugelförmigen Elementarpartikel einen Durchmesser von höchstens 200 Mikrometer haben,
umfassend:

a) das Herstellen einer Reaktionsmischung, welche die Vorläuferelemente von proto-zeolithischen Einheiten enthält, und zwar mindestens ein strukturgebendes Mittel, das aus den stickstoffhaltigen organischen Kationen, den Elementen aus der Familie der Alkalimetalle, den Kronenethern und den Diaminen ausgewählt ist, mindestens einen Siliciumdioxidvorläufer, der aus feststofflichen Siliciumdioxid in Pulverform, Kieselsäure, kolloidalem Siliciumdioxid, aufgelöstem Siliciumdioxid und Tetraethoxysilan (TEOS) ausgewählt ist, und mindestens eine Vorläufersubstanz mindestens eines Elements X, wobei das Element X aus Aluminium, Eisen, Germanium, Bor und Titan ausgewählt ist, wobei die Reaktionsmischung entweder wässrig oder wässrig-organisch ist, wobei das strukturgebende Mittel basisch ist oder die Reaktionsmischung durch Zusatz einer basischen Verbindung, die aus den Alkalimetallhydroxiden ausgewählt ist, basisch gemacht wird, und wobei die Reaktionsmischung solange hydrothermalen Bedingungen ausgesetzt wird, und zwar durch selbsterzeugten Druck bei einer Temperatur im Bereich von der Raumtemperatur bis 200 °C, bis sich eine klare Lösung bildet ;
b) das Vermischen in Lösung mindestens eines Tensids und mindestens der klaren Lösung, die gemäß a) erhalten wurde, derart, dass das Volumenverhältnis zwischen den anorganischen und den organischen Stoffen im Bereich von 0,26 bis 4 liegt, wobei der pH-Wert der Lösung, die in Schritt b) erhalten wird, höher als 9 ist ;
c) das Versprühen, durch Aerosolbildung, der Lösung, die in Schritt b) erhalten wurde, um die Bildung kugelförmiger Tröpfchen zu bewirken;
d) das Trocknen der Tröpfchen, und
e) das Entfernen des strukturgebenden Mittels und des Tensids,

wobei es sich bei den proto-zeolithischen Einheiten um Spezies zur Einleitung der Bildung mindestens eines Zeoliths, welche aus den Aluminosilicaten ZSM-5, ZSM-48, ZSM-22, ZSM-23, ZBM-30, EU-1, EU-2, EU-11, Beta, Zeolith A, Y, USY, VUSY, SDUSY, Mordenit, NU-87, NU-88, NU-86, NU-85, IM-5, IM-12, IZM-2 und Ferrierit ausgewählt ist, und/oder mindestens eines ähnlich gearteten Feststoffs, welcher aus den Silicoaluminophosphaten SAPO-11 und SAPO-34 ausgewählt ist, handelt, wobei die Herstellung der protozeolithischen Spezies nicht bis zum Stadium der Bildung kristallisierter Zeolithe und entsprechender ähnlich gearteter Feststoffe durchgeführt wird,
- das Vermischen des Materials, das eine abgestufte und organisierte Porenbeschaffenheit aufweist, mit mindestens einer aktiven Phase, die mindestens ein hydrierend / dehydrierend wirkendes Element aus der Gruppe VIB und/oder der Gruppe VIII des Periodensystems enthält.

**2.** Verfahren nach Anspruch 1, wobei es sich bei dem hydrierend / dehydrierend wirkenden Element der aktiven Phase, welches aus der Gruppe ausgewählt ist, die von den Elementen der Gruppe VIB des Periodensystems gebildet wird, um Molybdän handelt.

3. Verfahren nach Anspruch 1, wobei es sich bei dem hydrierend / dehydrierend wirkenden Element der aktiven Phase, welches aus der Gruppe ausgewählt ist, die von den Elementen der Gruppe VIB des Periodensystems gebildet wird, um Wolfram handelt.

4. Verfahren nach Anspruch 1, wobei das hydrierend / dehydrierend wirkende Element der aktiven Phase, welches aus der Gruppe ausgewählt ist, die von den Elementen der Gruppe VIII des Periodensystems gebildet wird, aus Kobalt, Nickel und Platin ausgewählt ist.

5. Verfahren nach Anspruch 1, wobei es sich bei dem Element der Gruppe VIII um Nickel handelt und es sich bei dem Element der Gruppe VIB um Wolfram handelt.

6. Verfahren nach einem der Ansprüche 1 bis 5, wobei keiner der kugelförmigen Partikel, aus denen das Material besteht, Makroporen aufweist.

7. Verfahren zum Hydrocracken und/oder hydrierenden Umwandeln von kohlenwasserstoffhaltigen Chargen, bei welchem der Katalysator verwendet wird, der nach einem der Ansprüche 1 bis 6 hergestellt wurde, derart, dass es in Anwesenheit von Wasserstoff, bei einer Temperatur von mehr als 200 °C, unter einem Druck von mehr als 1 MPa betrieben wird, wobei die Raumgeschwindigkeit im Bereich von 0,1 bis 20 h$^{-1}$ liegt und die eingeleitete Menge an Wasserstoff derart ist, dass das Volumenverhältnis an Litern Wasserstoff / Litern Kohlenwasserstoff im Bereich von 80 bis 5000 l/l liegt.

8. Verfahren zum Hydrocracken und/oder hydrierenden Umwandeln nach Anspruch 7, derart, dass es gemäß dem sogenannten Ein-Schritt-Verfahren durchgeführt wird.

9. Verfahren zum Hydrocracken und/oder hydrierenden Umwandeln nach Anspruch 7, derart, dass es gemäß dem sogenannten Zwei-Schritte-Verfahren durchgeführt wird.

10. Verfahren zur Hydrobehandlung von kohlenwasserstoffhaltigen Chargen, bei welchem der Katalysator verwendet wird, der nach einem der Ansprüche 1 bis 6 hergestellt wurde, derart, dass es in Anwesenheit von Wasserstoff, bei einer Temperatur von mehr als 200 °C, unter einem Druck von mehr als 1 MPa betrieben wird, wobei die Raumgeschwindigkeit im Bereich von 0,1 bis 20 h$^{-1}$ liegt und die eingeleitete Menge an Wasserstoff derart ist, dass das Volumenverhältnis an Litern Wasserstoff / Litern Kohlenwasserstoff im Bereich von 80 bis 5000 l/l liegt.

11. Verfahren nach Anspruch 10, derart, dass es einem Verfahren zum Hydrocracken und/oder hydrierenden Umwandeln vorgeschaltet ist.

12. Verfahren nach einem der Ansprüche 7 bis 11, wobei die kohlenwasserstoffhaltigen Chargen aus der Gruppe ausgewählt sind, die von den LCO (Light Cycle Oil: leichte Gasölfraktion, die aus einer katalytischen Crackanlage stammt), den atmosphärischen Destillaten, den Vakuumdestillaten, den Chargen, welche aus Anlagen zur Extraktion von aromatischen Verbindungen aus Schmierölgrundstoffen stammen oder welche aus der lösemittelgestützten Paraffinentfernung aus Schmierölgrundstoffen stammen, den Destillaten, welche aus Festbett- oder Wirbelbettverfahren zur Entschwefelung oder hydrierenden Umwandlung von RAT (atmosphärischen Rückständen) und/oder RSV (Vakuumrückständen) und/oder entasphaltierten Ölen stammen, den entasphaltierten Ölen, allein oder in Mischung, gebildet wird.

## Claims

1. A process for preparing a catalyst, comprising:

   • preparing at least one support formed from at least one amorphous material comprising silicon with a hierarchical and organized porosity, constituted by at least two elementary spherical particles in the form of aggregates, each of said particles comprising a matrix based on oxide of silicon, which is mesostructured, having a mesopore diameter in the range 1.5 to 30 nm and having amorphous and microporous walls entirely constituted by proto-zeolitic entities with a thickness in the range 1.5 to 50 nm, said elementary spherical particles having a maximum diameter of 200 microns;
   comprising:

a) preparing a reaction mixture containing the precursor elements of proto-zeolitic entities, namely at least one template selected from organic nitrogen-containing cations, elements from the alkali family, crown ethers and diamines, at least one silicic precursor selected from solid powdered silica, silicic acid, colloidal silica, dissolved silica and tetraethoxysilane (TEOS) and at least one precursor of at least one element X, X being selected from aluminium, iron, germanium, boron and titanium, said reaction mixture being either aqueous or aquo-organic, the template being basic or the reaction mixture being rendered basic by adding a basic compound selected from alkali metal hydroxides, and said reaction mixture being placed under hydrothermal conditions under autogenous pressure at a temperature in the range from ambient temperature to 200°C until a clear solution is formed;

b) mixing, in solution, at least one surfactant and at least said clear solution obtained in accordance with a) such that the ratio of the volumes of inorganic and organic materials is in the range 0.26 to 4, the pH of the solution obtained in step b) being greater than 9;

c) atomizing, by aerosol of, said solution obtained in step b) to result in the formation of spherical droplets; d) drying said droplets; and e) eliminating said template and said surfactant, in which said proto-zeolitic entities are species for initiating at least one zeolite selected from the aluminosilicates ZSM-5, ZSM-48, ZSM-22, ZSM-23, ZBM-30, EU-1, EU-2, EU-11, beta, zeolite A, Y, USY, VUSY, SDUSY, mordenite, NU-87, NU-88, NU-86, NU-85, IM-5, IM-12, IZM-2 and ferrierite and/or at least one related solid selected from silicoaluminophosphates SAPO-11 and SAPO-34, the preparation of said proto-zeolitic species not being carried out to the stage at which crystalline zeolites and corresponding related solids are formed;

• mixing said material with a hierarchical and organized porosity with at least one active phase containing at least one hydrodehydrogenating element from group VIB and/or group VIII of the periodic table of the elements.

2. A process according to claim 1, in which said hydrodehydrogenating element of said active phase selected from the group formed by elements from group VIB of the periodic table of the elements is molybdenum.

3. A process according to claim 1, in which said hydrodehydrogenating element of said active phase selected from the group formed by elements from group VIB of the periodic table of the elements is tungsten.

4. A process according to claim 1, in which said hydrodehydrogenating element selected from the group formed by elements from group VIII of the periodic table of the elements is selected from cobalt, nickel and platinum.

5. A process according to claim 1, in which said element from group VIII is nickel and said element from group VIB is tungsten.

6. A process according to one of claims 1 to 5, in which none of the spherical particles constituting said material has macropores.

7. A process for hydrocracking and/or hydroconversion of hydrocarbon feeds using the catalyst prepared in accordance with one of claims 1 to 6, operated in the presence of hydrogen, at a temperature of more than 200°C, at a pressure of more than 1 MPa, the hourly space velocity being in the range 0.1 to 20 h$^{-1}$ and the quantity of hydrogen introduced being such that the volume ratio of litres of hydrogen/litres of hydrocarbon is in the range 80 to 5000 L/L.

8. A hydrocracking and/or hydroconversion process according to claim 7, carried out in accordance with a once-through process.

9. A hydrocracking and/or hydroconversion process according to claim 7, carried out in accordance with a two-step process.

10. A process for hydrotreating hydrocarbon feeds using the catalyst prepared in accordance with one of claims 1 to 6, operated in the presence of hydrogen, at a temperature of more than 200°C, at a pressure of more than 1 MPa, the hourly space velocity being in the range 0.1 to 20 h$^{-1}$ and the quantity of hydrogen introduced being such that the volume ratio of litres of hydrogen/litres of hydrocarbon is in the range 80 to 5000 L/L.

11. A process according to claim 10, placed upstream of a hydrocracking and/or hydroconversion process.

12. A process according to one of claims 7 to 11, in which the hydrocarbon feeds are selected from the group formed by LCO (light cycle oil; light gas oils from a catalytic cracking unit), atmospheric distillates, vacuum distillates, feeds from units for aromatic extraction of lubricating base oils or from solvent dewaxing of lubricating base oils, distillates deriving from processes for fixed bed or ebullated bed desulphurization or hydroconversion of AR (atmospheric residues) and/or VR (vacuum residues) and/or deasphalted oils, or deasphalted oils, used alone or as a mixture.

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6669924 B

- FR 2840621

**Littérature non-brevet citée dans la description**

- **G. J. DE A. A. SOLER-IIIIA ; C. SANCHEZ ; B. LEBEAU ; J. PATARIN.** *Chem. Rev.,* 2002, vol. 102, 4093
- **J. S. BECK ; J. C. VARTULI ; W. J. ROTH ; M. E. LEONOWICZ ; C. T. KRESGE ; K. D. SCHMITT ; C. T.-W. CHU ; D. H. OLSON ; E. W. SHEPPARD ; S. B. MCCULLEN.** *J. Am. Chem. Soc.,* 1992, vol. 114 (27), 10834
- **D. ZAHO ; J. FENG ; Q. HUO ; N. MELOSH ; G. H. FREDRICKSON ; B. F. CHMELKE ; G. D. STUCKY.** *Science,* 1998, vol. 279, 548
- **Y. -H. YUE ; A. GÉDÉON ; J. -L. BONARDET ; J. B. D'ESPINOSE ; N. MELOSH ; J. FRAISSARD.** *Stud. Surf. Sci. Catal.,* 2000, vol. 129, 209
- **Z. ZHANG ; Y. HAN ; F. XIAO ; S. QIU ; L. ZHU ; R. WANG ; Y. YU ; Z. ZHANG ; B. ZOU ; Y. WANG.** *J. Am. Chem. Soc.,* 2001, vol. 123, 5014
- **A. KARLSSON ; M. STÖCKER ; R. SCHMIDT.** *Micropor. Mesopor. Mater.,* 1999, vol. 27, 181
- **P. PROKESOVA ; S, MINTOVA ; J. CEJKA ; T. BEIN.** *Micropor. Mesopor. Mater.,* 2003, vol. 64, 165
- **D. T. ON ; S. KALIAGUINE.** *Angew. Hem. Int. Ed.,* 2002, vol. 41, 1036

- **F. ROUQUEROL ; J. ROUQUEROL ; K. SING.** Adsorption by powders and porous solids. Principles, methodology and applications. Academic Press, 1999
- **M. JARONIEC ; M. KRUCK ; J. P. OLIVIER.** *Langmuir,* 1999, vol. 15, 5410
- **C. BAERLOCHER ; W. M. MEIER ; D. H. OLSON.** Atlas of zeolite framework types. 2001
- **P. PROKESOVA ; S. MINTOVA ; J. CEJKA ; T. BEIN.** *Micropor. Mesopor. Mater.,* 2003, vol. 64, 165
- **Y. LIU ; W. Z. ZHANG ; T. J. PINNAVAIA.** *J. Am. Chem. Soc.,* 2000, vol. 122, 8791
- **K. R. KLOETSTRA ; H. W. ZANDBERGEN ; J. C. JANSEN ; H. VANBEKKUM.** *Microporous Mater.,* 1996, vol. 6, 287
- **A. E. PERSSON ; B. J. SCHOEMAN ; J. STERTE ; J. -E. OTTERSTEDT.** *Zéolites,* 1995, vol. 15, 611
- **S. FÖRSTER ; M. ANTIONNETTI.** *Adv.Mater,* 1998, vol. 10, 195
- **S. FÖRSTER ; T. PLANTENBERG.** *Angew. Chem. Int. Ed,* 2002, vol. 41, 688
- **H. CÖLFEN.** *Macromol. Rapid Commun,* 2001, vol. 22, 219